# EUROPEAN PATENT SPECIFICATION

(11) **EP 1 344 930 B1**
(45) Date of publication and mention of the grant of the patent: **13.01.2010**
(21) Application number: 03005647.7
(22) Date of filing: 12.03.2003
(51) Int. Cl.: F02M 61/14, F01L 1/26, F02F 1/42, F02B 3/06, F02F 1/24

(54) **Internal combustion engine with fuel injection valve**
Brennkraftmaschine mit Kraftstoffeinspritzventil
Moteur à combustion interne avec soupape d'injection de carburant

(30) Priority: 14.03.2002 JP 2002070422
(43) Date of publication of application: 17.09.2003
(73) Proprietor: HONDA GIKEN KOGYO KABUSHIKI KAISHA, Tokyo (JP)
(72) Inventor: Shimoyama, Kazuaki, Wako-shi, Saitama (JP); Mamiya, Hiroyuki, Wako-shi, Saitama (JP); Hara, Ikuro, Wako-shi, Saitama (JP); Arai, Hidemi, Wako-shi, Saitama (JP); Asari, Masaru, Wako-shi, Saitama (JP); Kanda, Tomohiro, Wako-shi, Saitama (JP); Yoshida, Yutaka, Wako-shi, Saitama (JP)
(74) Representative: Prechtel, Jörg

(56) References cited:
- DE-B- 1 224 092
- PATENT ABSTRACTS OF JAPAN vol. 1997, no. 12, 25 December 1997 (1997-12-25) & JP 9 209760 A (NISSAN MOTOR CO LTD), 12 August 1997 (1997-08-12)
- PATENT ABSTRACTS OF JAPAN vol. 0082, no. 24 (M-331), 13 October 1984 (1984-10-13) & JP 59 105965 A (YANMAR DIESEL KK), 19 June 1984 (1984-06-19)
- PATENT ABSTRACTS OF JAPAN vol. 1999, no. 08, 30 June 1999 (1999-06-30) & JP 11 082242 A (TOYOTA MOTOR CORP), 26 March 1999 (1999-03-26)
- PATENT ABSTRACTS OF JAPAN vol. 1998, no. 13, 30 November 1998 (1998-11-30) & JP 10 213051 A (TOYOTA MOTOR CORP), 11 August 1998 (1998-08-11)

## Description

### BACKGROUND OF THE INVENTION

### 1. Field of the Invention

The present invention relates to an internal combustion engine in which a fuel injection valve for injecting fuel into a combustion chamber is fixed with a clamp to a cylinder head in which an intake port having an intake valve opening which is opened and closed by an intake valve and an exhaust port having an exhaust valve opening which is opened and closed by an exhaust valve are provided.

### 2. Description of the Related Art

Conventionally, as one of internal combustion engines of this type, for example, JP-A-10-213051 discloses an internal combustion engine. In this DOHC internal combustion engine, in each cylinder, a fuel injection valve situated at the center of an area surrounded by two intake valves which open and close intake ports and two exhaust valves which open and close exhaust ports is fixed to the cylinder head with a nozzle clamp disposed between two camshafts, as viewed from the top of the engine. Then, the nozzle clamp is disposed between a valve lifter for one of the intake valves and a valve lifter for one of the exhaust valves and extends along the camshafts.

In the related art, incidentally, since the intervals between the valve lifters of the intake valves and the valve lifters of the exhaust valves which confront each other in a direction intersecting the axial center of the camshaft orthogonally as viewed from the top are made substantially equal to one another, the intervals between the pair of intake valve openings and the pair of exhaust valve openings which confront the pair of intake valve openings, respectively, in the orthogonal direction are considered to be substantially equal. Due to this, an appropriate location for the clamp is selected from the intervals so formed between the intake valve openings and the exhaust valve openings which confront each other.

However, there is a case where the location of clamps has to be carefully determined in consideration of the arrangement of intake valve openings and exhaust valve openings. For example, in order that intake air entering a cylinder from intake ports produces a strong swirl in the cylinder, one of the pair of intake valve openings is disposed closer to the exhaust valve opening than the other. In addition, in an internal combustion engine having a small cylinder bore, the interval in the orthogonal direction between an intake valve opening and an exhaust valve opening also becomes small.

In such cases, there is caused a problem of how to achieve the compatibility between the realization of induction and exhaust characteristics through arrangement of valve openings by harmonizing the arrangement of intake valve and exhaust valve openings with the arrangement of a clamp while avoiding an interference of a intake valve device having an intake valve for opening and closing the intake valve opening and an exhaust valve device having an exhaust valve for opening and closing the exhaust valve opening with the clamp and the realization of miniaturization of the clamp and hence of the cylinder head.

Further, as one of internal combustion engines of this type, for example, JP-A-11-82242 discloses an internal combustion engine. In this internal combustion engine, a fuel injection nozzle for injecting fuel into a combustion chamber is disposed between an intake camshaft and an exhaust camshaft which are rotatably supported on a cylinder head and is then supported on and fixed to the cylinder head by a clamp which extends between the fuel injection nozzle and the cylinder head. The intake camshaft and the exhaust camshaft are rotatably supported in pairs of bearing bores each constituted by a bearing portion provided on the cylinder head and a cam cap which is disposed on an upper side of the bearing portion and is then fixed to the bearing portion with bolts. In addition, the clamp includes a presser piece and a fixing bolt. The presser piece has a presser portion adapted to press against the fuel injection nozzle and a support portion which constitutes an abutment portion on the cylinder head side, and the fixing bolt is passed through the presser piece so as to screw into the cylinder head between the presser portion and the support portion which are disposed to extend in the axial direction of the camshaft. Then, the support portion of the presser portion is brought into abutment with an inter-camshaft fixing portion, which is situated between both the camshafts, of the cam cap which rotatably supports both the intake and exhaust camshafts and is then supported on the inter-camshaft fixing portion.

Incidentally, in the aforesaid related-art internal combustion engine, since the support portion of the presser piece of the clamp is supported by the cam cap, there is provided an advantage that an axial interval between the cam caps which are adjacent to each other in an axial direction of the camshaft can be made narrow, whereby the internal combustion engine can be made small in size in the axial direction. Since the support portion of the presser piece is situated on the cam cap, however, the presser piece is destined to occupy a higher position in the axial direction of the cylinder, whereby there is caused a tendency that the internal combustion engine is made large in size in the cylinder axial direction. On top of that, since the axial interval between the adjacent cam caps is restricted by the axial length of the presser piece, in an internal combustion engine having a plurality of cylinders arranged in line, an interval between the adjacent cylinders in the axial direction is also restricted by the length of the presser piece, and this makes it difficult to miniaturize the internal combustion engine in the axial direction.

JP-A-10213051 discloses an internal combustion engine in accordance with the preamble of claim 1. Each cylinder has two intake valves and two exhaust valves. The respective equal intervals between two adjacent intake and exhaust tappets is wider than the respective equal interval between two adjacent intake valve tappets and between two adjacent exhaust valve tappets, and the clamp is disposed in the wider interval between two adjacent intake and exhaust valve tappets.

### SUMMARY OF THE INVENTION

The invention was made in view of the situations, and an object of the invention is to make a cylinder head smaller in size, while attempting to avoid or reduce limitations imposed by a clamp for fixing a fuel injection valve to a cylinder head on the arrangement of intake and exhaust valve openings.

According to the first aspect of the invention, there is provided an internal combustion engine comprising: a cylinder in which a piston fits to reciprocate freely therein and defining a cylinder axis; a cylinder head which supports thereon a camshaft rotatably and which defines an intake port having an intake valve opening and an exhaust port having an exhaust valve opening; and a fuel injection valve fixed to said cylinder head with a clamp, wherein three or more valve openings comprising said intake valve openings and said exhaust valve opening which correspond to said cylinder are disposed around said fuel injection valve at intervals in a circumferential direction, wherein each of said valve openings is opened and closed by an engine valve device comprising an intake valve or an exhaust valve, a first intake valve opening and a second intake valve opening is disposed on the other side, said clamp is disposed, considered in a plane perpendicular to the cylinder axis, between said second intake valve opening and said exhaust valve opening, which constitute two adjacent valve openings which are adjacent to each other, the internal combustion engine being **characterized in that**: said first intake valve opening is disposed closer to said plane than said second intake valve opening; and said second intake valve opening and said exhaust valve opening have a widest interval among intervals formed between any two adjacent valve openings of said three or more valve openings.

Thus, since the clamp is disposed between the first and second valve openings, as viewed from the top i.e. in a plane perpendicular to the cylinder axis, by making use of the interval formed therebetween which is the widest interval of the intervals that are formed between any two valve openings of the valve openings which are adjacent in the circumferential direction and which can be formed only between the first and second valve openings which constitute an only pair of valve openings that can form the widest interval, the clamp and hence the cylinder head do not have to be enlarged to take such a form that can avoid the interference between the clamp and the engine valve device.

As a result, the following advantage is provided. Namely, the three or more valve openings comprising the intake valve opening and the exhaust valve opening that are opened and closed by the engine valve devices are disposed around the fuel injection valve at intervals in the circumferential direction in such a manner as to correspond to the cylinder, and the clamp is disposed, as viewed from the top, between the first valve opening and the second valve opening which are only the two adjacent valve openings that form the widest interval, whereby the clamp is disposed between the first and second valve openings by making use of the interval formed therebetween which is the widest interval of the intervals that are formed between any two valve openings of the valve openings which are adjacent in the circumferential direction and which can be formed only between the first and second valve openings. Thus, the clamp and hence the cylinder head can be made smaller in size, and the limitations imposed by the clamp on the arrangement of the intake and exhaust valve openings can be eliminated to thereby reduce or eliminate a risk of damaging the induction and exhaust characteristics.

Here, the clamp is disposed on the internal combustion engine comprising the intake ports designed to produce a strong spiral swirl by allowing the pair of intake valve openings to be situated different distances from the plane or to be disposed in a zigzag fashion by disposing the first intake valve opening closer to the plane between the second intake valve opening and the exhaust valve opening by making use of the widest interval formed between the second intake valve opening disposed farther away from the plan than the first intake valve opening and the exhaust valve opening, and therefore, the limitation imposed by the clamp on the arrangement of the first intake valve opening which produces a strong spiral swirl within the cylinder is avoided.

As a result, the following advantage is provided. Namely, the clamp is disposed on the internal combustion engine comprising the intake ports designed to produce a strong spiral swirl within the cylinder by including the first intake valve opening and the second intake valve openings that are disposed on one side relative to the plane including the cylinder axis and the exhaust valve opening disposed on the other side and allowing the first intake valve opening closer to the plane by disposing the first intake valve opening closer to the plane than the second intake valve opening between the second intake valve opening and the exhaust valve opening by making use of the widest interval formed between the second intake valve opening disposed farther away from the plane than the first intake valve opening and the exhaust valve opening, and therefore, a risk is avoided of the characteristics of a spiral swirl produced within the cylinder being damaged by the limitations imposed by the clamp on the arrangement of the first intake valve opening that produces a strong spiral swirl and the combustibility is increased.

Preferably, a fixing seat to which the clamp is fixed is provided on the cylinder head in such a manner as to protrude upwardly in a direction of the cylinder axis between the first valve opening and the second valve opening, as viewed from the top, and wherein a recessed portion is provided in the fixing seat in order to avoid an interference with at least one of a constituent member of the engine valve device for opening and closing the first valve opening and a constituent member of the engine valve device for opening and closing the second valve opening.

Thus, by making use of the recessed portion provided in the fixing seat provided between the first and second valve openings, as viewed from the top, so that the clamp is fixed thereto, a contact can be eliminated that would otherwise occur between the fixing seat and the constituent member of the engine valve device due to vibrations generated during the operation of the internal combustion engine, and in addition, the constituent members of the engine valve devices for opening and closing the first and second valve openings can be disposed closer to the fixing seat.

As a result, the following advantage is provided. Namely, the recessed portion for avoiding an interference with at least one of the constituent member of the engine valve device for opening and closing the first valve opening and the constituent member of the engine valve device for opening and closing the second valve opening is provided in the fixing seat provided on the cylinder head in such a manner as to protrude upwardly in the direction of the cylinder axis between the first and the second valve opening, as viewed from the top, whereby since the constituent members of the engine valve devices for opening and closing the first and second valve openings can be disposed closer to the fixing seat by making use of the recessed portion in the fixing seat provided between the first and second valve openings, as viewed from the top, the contact generated by the vibrations of the internal combustion engine between the fixing seat and the constituent members of the engine valve devices can be prevented, and additionally, the cylinder head can be made smaller in size. Moreover, since the first and second valve openings can be disposed closer to each other, irrespective of the fact that the clamp is disposed between the first and second valve openings, as viewed from the top, in this respect, too, the limitations imposed by the clamp on the arrangement of the intake valve opening or exhaust valve opening can be restricted further.

Preferably, the internal combustion engine has a plurality of the cylinders that are arranged in line, wherein the first valve opening and the second valve opening of each of the plurality of the cylinders are disposed substantially symmetrically with respect to a central plane of the cylinder head which passes through a central point in an axial direction of the camshaft and intersects a rotational axis of the camshaft orthogonally, and wherein a fixed portion of the clamp having a presser portion which presses against the fuel injection valve corresponding to the cylinder situated at either end portion in the axial direction is situated closer to the central plane than the presser portion.

Thus, the first and second valve openings are disposed to the plurality of cylinders arranged in line in such a manner as to be substantially symmetrically with respect to the central plane, and in the cylinder situated at either end portion, the clamp is disposed in such a manner as to extend from the fuel injection valve toward the central plane. Thus, since the clamp extends in the direction of the central plane, there is no case where the clamp protrudes from the opposite end portion to the central plane or the axial end portion of the cylinder head.

As a result, the following advantage is provided. Namely, the first valve opening and the second valve opening of each of the cylinders that are arranged in line are disposed substantially symmetrically with respect to the central plane of the cylinder head in the axial direction of the camshaft, and the fixed portion of the clamp having the presser portion for pressing the fuel injection valve confronting the cylinder situated at either end portion, which fixed portion is fixed to the fixing portion, is situated closer to the central plane than the presser portion, whereby in the cylinder situated at either end portion, the clamp does not protrude from the opposite end portion to the central plane or either end portion of the cylinder head in the axial direction thereof, and therefore, the cylinder head and hence the internal combustion engine is made smaller in size in the axial direction.

Preferably, the internal combustion engine has a plurality of the cylinders that are arranged in line, and wherein in the cylinder situated at each end portion in the axial direction of the cam shaft, the first valve opening and the second valve opening are situated closer to the center of the cylinder head in the axial direction relative to the remaining valve opening.

Thus, among the plurality of the cylinders that are arranged in line, in the cylinder situated at either end portion in the axial direction, since the first and second valve openings between which the clamp is disposed are situated closer to the center of the cylinder head, the clamp does not protrude from the opposite end portion to the center of the cylinder head or either end portion of the cylinder head in the axial direction.

As a result, the following advantage is provided. Namely, among the plurality of the cylinders that are arranged in line, in the cylinder situated at either end portion in the axial direction of the camshaft, the first and second valve openings are situated closer to the center of the cylinder head relative to the remaining valve opening, whereby in the cylinder situated at either end portion in the axial direction, since the clamp does not protrude from the opposite end portion to the center of the cylinder head or either end portion of the cylinder head, the cylinder head and hence the internal combustion engine is made smaller in size in the axial direction.

Preferably, said camshaft comprises an intake camshaft and an exhaust camshaft, which are disposed in parallel with each other and are rotatably supported on a cylinder head via a plurality of intake-side bearing portions and a plurality of exhaust-side bearing portions respectively, and a fixed portion which is adapted to be fixed to a fixing portion of said fixing seat, wherein said clamp, said intake-side bearing portion and said exhaust-side bearing portion are disposed so as to have portions situated on the same plane which intersects with a cylinder axis of said cylinder orthogonally, wherein joining portions of said intake-side bearing portion and said exhaust-side bearing portion to said cylinder head are connected to each other by a connecting wall, between said intake camshaft and said exhaust camshaft, and wherein an accommodating portion for accommodating at least either part of said fixing seat or part of said clamp is formed in said connecting wall in such a manner as to opening in an axial direction of said intake camshaft or said exhaust camshaft.

Thus, the clamp and the intake-side bearing portions and the exhaust-side bearing portions are disposed so as to have the positions situated on the same plane which intersects the axis of the cylinder orthogonally, whereby the clamp is allowed to occupy the position which overlaps the intake-side and exhaust-side bearing portions in a positional relationship in the cylinder axial direction, thereby making it possible to suppress the enlargement of the internal combustion engine in the cylinder axial direction to such an extent that the clamp overlaps the camshafts. The axial intervals between the adjacent intake-side bearing portions and between the adjacent exhaust-side bearing portions can be made narrower than the axial intervals between the bearing portions which are directly restricted by the axial length of the clamp or the fixing seat to such an extent that at least either part of the fixing seat or part of the clamp is accommodated in the accommodating portion formed in the connecting wall in such a manner as to open in the axial direction. The connecting wall is connected to the joining portions, whereby the joining rigidity at the joining portions is increased, and the reduction in rigidity of the connecting wall is also avoided irrespective of the formation of the accommodating portion therein.

As a result, the following advantage is provided. Namely, since the clamp and the intake-side bearing portions and the exhaust-side bearing portions are disposed in such a manner as to have the positions situated on the same plane which intersects the axis of the cylinder orthogonally, the enlargement of the internal combustion engine in the cylinder axial direction due to the provision of the clamp is suppressed. The joining portions of the intake-side and exhaust-side bearing portions to the cylinder head are connected together by the connecting wall between the intake camshaft and the exhaust camshaft, and the accommodating portion for accommodating at least either part of the fixing seat or part of the clamp is formed in the connecting wall in such a manner as to open in the axial direction, whereby the axial intervals between the adjacent intake-side bearing portions and the adjacent exhaust-side bearing portions can be made narrow to such an extent that either part of the fixing seat or part of the clamp is accommodated in the accommodating portion, thereby making it possible to miniaturize the internal combustion engine in the axial direction. Furthermore, the joining rigidity at the joining portions is increased due to the connecting wall being joined to the joining portions, whereby the joining force can be increased, and moreover, the vibration of the connecting wall can be suppressed by avoiding the reduction in rigidity of the connecting wall in which the accommodating portion is formed, the interference of the connecting wall with a member disposed in the vicinity of the connecting wall being thereby prevented.

Preferably, the clamp is, as viewed from the top, disposed between such that the presser portion and the fixed portion extend along the axial direction, and wherein part of the fixing seat is the fixing portion and part of the clamp is the fixed portion.

Thus, the clamp in which the presser portion and the fixed portion are disposed in such a manner as to extend in the axial direction extends in the axial direction between the intake camshaft and the exhaust camshaft, and therefore, the fixing seat to which the clamp is fixed also extends in the axial direction relative to the clamp. Then, at least either the fixing portion which is part of the fixing seat in the axial direction or the fixed portion which part of the clamp in the axial direction is accommodated in the accommodating portion.

As a result, the following advantage is provided. The clamp is, as viewed from the top, disposed between the intake camshaft and the exhaust camshaft in such a manner that the presser portion and the fixed portion extend along the axial direction, whereby since at least either the fixing portion which is part of the axially extending fixing seat or the fixed portion which is part of axially extending clamp is accommodated in the accommodating portion, the enlargement of the internal combustion engine is suppressed in a direction intersecting orthogonally the axial direction, as viewed from the top.

Preferably, the fixed portion of said clamp for the fuel injection valve which corresponds to one of end cylinders situated at both ends in the axial direction is disposed so as to be closer to an intermediate cylinder situated between both the end cylinders in the axial direction relative to the presser portion, and wherein the connecting wall is concaved on a side thereof in the axial direction where the accommodating portion is formed and thus comprises a curved wall forming the accommodating portion.

Thus, the fixed portion of the clamp for the fuel injection valve which corresponds to at least one of the end cylinders is disposed so as to be closer to the intermediate cylinder, whereby since the connecting wall comprising the curved wall in which the accommodating portion for accommodating at least one of the fixed portion and the fixing portion is formed is situated closer to the intermediate cylinder, there is caused no risk that the connecting wall comprising the curved wall protrudes from the end cylinder in the axial direction.

As a result, the following advantage is provided. Namely, in the internal combustion engine which is a multi-cylinder internal combustion engine comprising three or more cylinders arranged in line, the fixed portion of the clamp for the fuel injection valve which corresponds to at least one of the end cylinders is disposed so as to be closer to the intermediate cylinder relative to the presser portion, and the connecting wall is constituted by the curved wall which is concaved on the accommodating portion side so as to form the accommodating portion, whereby since the connecting wall in which the accommodating portion is formed is situated closer to the intermediate cylinder, the connecting wall comprising the curved wall is prevented from protruding from the end of the cylinder head in the axial direction, and therefore, the multi-cylinder internal combustion engine comprising three or more cylinders arranged in line can be made small in size in the axial direction.

Preferably, the fixed portions of the clamps for fixing the fuel injection valves which correspond, respectively, to the intermediate cylinders which are two in number and are adjacent to each other confront directly without a wall positioned therebetween which connects, as viewed from the top, the intake-side bearing portion with the exhaust-side bearing portion.

Thus, since the fixed portions of the clamps for fixing the fuel injection valves which correspond, respectively, to the intermediate cylinders which are two in number and are adjacent to each other confront directly without a wall positioned therebetween which connects, as viewed from the top, the intake-side bearing portion with the exhaust-side bearing portion, at the two adjacent intermediate cylinders, the fixed portions can be disposed adjacent to each other, and the interference of the fixed portions of the clamps with the fixed portions belonging to the end cylinders or the connecting walls in which the accommodating portions adapted to accommodate the fixing portions can be avoided.

As a result, the following advantage is provided. Namely, the fixed portions of the clamps which correspond, respectively, to the two adjacent intermediate cylinders confront each other directly without any wall positioned therebetween which connects together the intake-side bearing portion and the exhaust-side bearing portion, as viewed from the top, whereby at the two adjacent intermediate cylinders, the fixed portions can be disposed so as to be closer to each other, and the interference of the fixed portions with the fixed portions belonging to the end cylinders or the connecting walls in which the accommodating portions adapted to accommodate the fixing portions can be avoided, thereby making it possible to miniaturize the multi-cylinder internal combustion engine comprising three or more cylinders arranged in line in the axial direction.

Note that in this specification, the "axial direction" means a direction of the rotational axis of the camshaft, "as viewed from the top" means viewing from the axis of the cylinder, and the "vertical direction" means a direction of the axis of the cylinder, wherein a side of the cylinder where the cylinder head is coupled is considered as upper.

### BRIEF DESCRIPTION OF THE DRAWINGS

Fig. 1 is a top plan view of a main part of a cylinder head of an internal combustion engine according to a first embodiment of the invention in which rocker arms and a lower cam holder are assembled;
Fig. 2 is a sectional view taken along the line II-II in Fig. 1;
Fig . 3 is a sectional view taken along the line III-III in Fig. 1;
Fig. 4 is a sectional view taken along the line IV-IV in Fig. 1;
Fig. 5 is a top plan view of the lower cam holder of the internal combustion engine shown in Fig. 1;
Fig. 6 is a bottom plan view of the lower cam holder of the internal combustion engine shown in Fig. 1;
Fig. 7 is a sectional view taken along the line VII-VII in Fig. 5;
Fig. 8 is a sectional view taken along the line VIII-VIII in Fig. 5;
Fig. 9 is a top plan view of the cylinder head;
Fig. 10 is a sectional view taken along the line X-X in Fig. 3; and
Figs. 11A and 11B are sectional views showing another embodiment of the invention, in which Fig. 11A is a sectional view of a main part corresponding to Fig. 2 and Fig. 11B is a sectional view of a main part corresponding to Fig. 10.

### DETAILED DESCRIPTION OF THE PREFERRED EMBODIMENTS

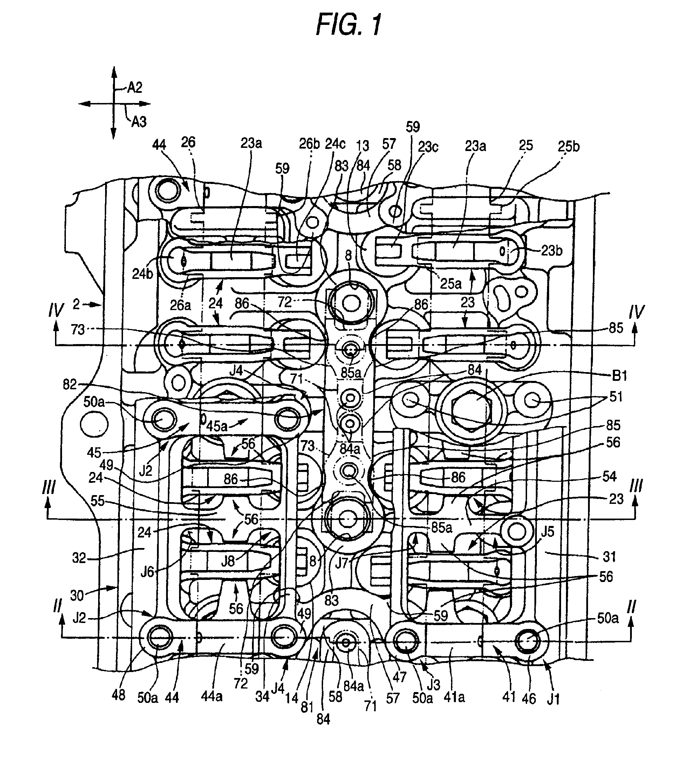

Embodiments of the invention will be described with reference to Figs. 1 to 11.

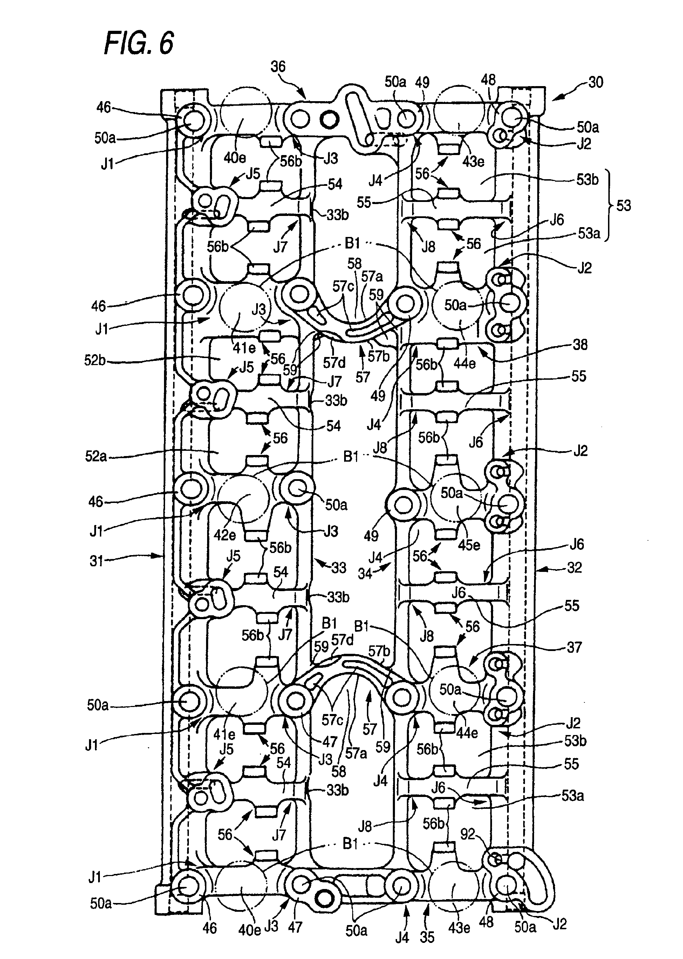

Referring to Figs. 1 to 5, an internal combustion engine E to which the invention is applied is a compression ignition DOHC in-line four internal combustion engine. The internal combustion engine E includes a cylinder block (not shown), a cylinder head 2 and a head cover 3. In the cylinder block, four cylinders 1₁ to 1₄ in which pistons (not shown) fit so as to reciprocate freely therein are disposed in series, each of the cylinders including a combustion chamber having a recessed portion formed in a top surface thereof. The cylinder head 2 is coupled to an upper end face of the cylinder head with head bolts B1 (refer to Fig. 6, as well) . The cylinder head cover 3 is coupled to an upper end face of the cylinder head 2.

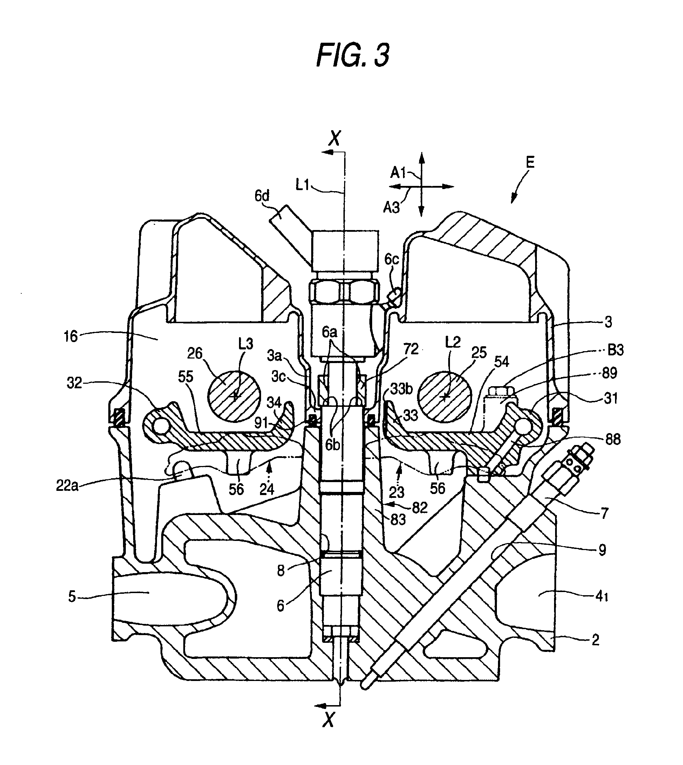

In the cylinder head 2, a pair of independent first and second intake ports 4₁, 4₂ having intake valve openings 4₁a, 4₂a, respectively, which open to the interior of the cylinder 1₁ to 1₄ and an exhaust port 5 having a pair of exhaust valve openings 5₁a, 5₂a which open to the interior of the cylinder 1₁ to 1₄ are formed for each cylinder 1₁ to 1₄. Rurthermore, as shown in Fig. 3, an insertion hole 8 disposed coaxially with the axis L1 of the cylinder for insertion of a fuel injection valve 6 for injecting fuel into the interior of the combustion chamber and an insertion hole 9 for insertion of a glow plug 7 for heating compressed air are also formed for each cylinder in the cylinder head 2.

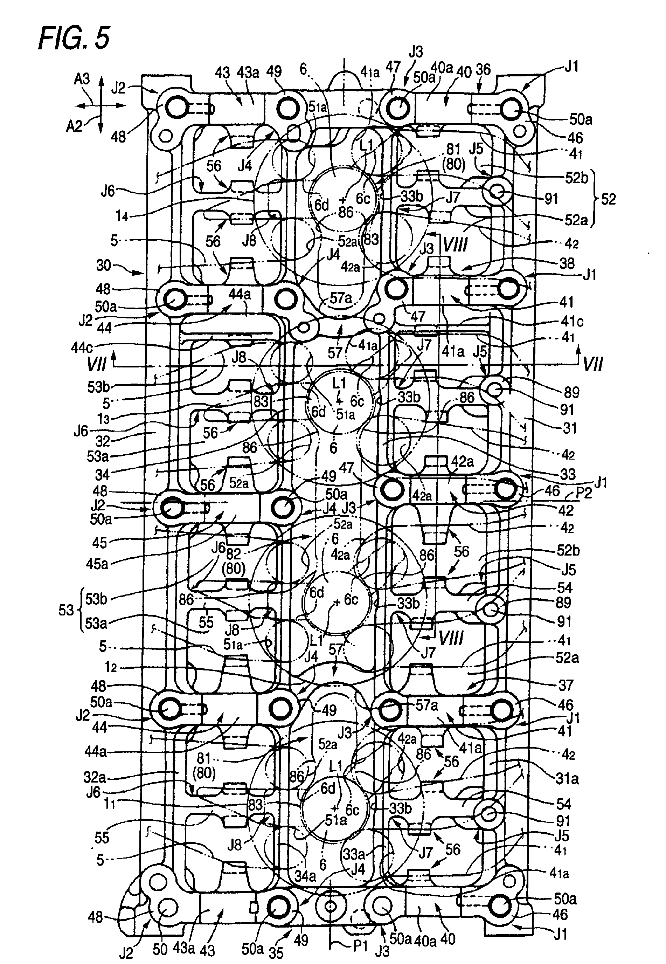

Referring to Fig. 5, when viewing from a direction A1 of the axial L1 of the cylinder (hereinafter, referred to as a "cylinder axial direction A1") or from the top, the first intake port 4₁ includes a straight port adapted to allow intake air to enter each cylinder 1₁ to 1₄ in a tangent direction so as to generate a spiral swirl which is an eddy current within the cylinder 1, and the second intake port 4₂ includes a helical port adapted to generate in each cylinder 1₁ to 1₄ a spiral swirl which swirls in an opposite direction to that of the swirl generated by the first intake port 4₁.

Then, in an intake passage of an intake system which communicates with the second intake port 4₂, an intake control valve is provided for opening and closing the intake passage in order to control the intensity of a swirl generated in the cylinder 1₁ to 1₄ according to the conditions of the engine, for example, the engine revolution speeds and the engine loads. Thus, when the internal combustion engine E runs at low revolution speed or low load, the intake control valve is controlled to fully close or open with a small opening so as to restrict the admission of intake air from the second intake port 4₂, whereby a strong swirl is generated in each cylinder 1₁ to 1₄ by intake air from the first intake port 4₁, the combustibility being thereby increased. When the internal combustion engine E runs at high revolution speed or high load, the intake control valve is controlled to fully open so as to allow the admission of a large amount of intake air from the first and second intake ports 4₁, 4₂ into each cylinder 1₁ to 1₄, whereby a high output can be obtained.

Here, the cylinders of the internal combustion engine E that are arranged in line are constituted by the end cylinders 1₁, 1₄ which are situated at ends in rotational axes L2, L3 of camshafts 25, 26, which will be described later, or in an axial direction A2 and the intermediate cylinders 1₂, 1₃ which are situated between both the end cylinders 1₁, 1₄. In each cylinder 1₁ to 1₄, the intake vale opening 4₁a of the first intake port 4₁ and the intake valve opening 4₂a of the second intake port 4₂ are disposed on an intake side which is one side relative to a first central plane P1 which is a plane including cylinder axes L1 (this plane is a plane which includes the cylinder axes L1 and which is parallel to the rotational axes L2, L3 in each cylinder 1₁ to 1₄), whereas the pair of exhaust valve openings 5₁a, 5₂a of the exhaust port 5 are disposed on an exhaust side which is the other side of the first central plane P1. Then, the intake valve opening 4₁a functioning as a first intake valve opening is formed at a position closer to the first central plane P1 in an orthogonal direction A3, which will be described later, than the intake valve opening 4₂a functioning as a second intake valve opening. In addition, the pair of exhaust valve openings 5₁a, 5₂a of the exhaust port 5 are situated substantially equal distance in the orthogonal direction A3 from the first central plane P1.

Furthermore, in each end cylinder. 1₁, 1₄, the second intake valve port 4₂a and the exhaust valve 5₂a are situated closer to the intermediate cylinder 1₂, 1₃ which are adjacent to the end cylinder 1₁, 1₄ , and in each intermediate cylinder 1₂, 1₃, the second intake valve port 4₂a and the exhaust valve 5₂a are situated closer to the intermediate cylinder 1₃, 1₂ which are adjacent thereto.

As shown in Fig. 5, in each cylinder 1₁ to 1₄, the intake valve openings 4₁a, 4₂a and the exhaust valve openings 5₁a, 5₂a constitute four valve openings and are disposed around the fuel injection valve 6 at intervals in the circumferential direction. Then, among intervals formed between any two valve openings 4₁a, 4₂a; 4₂a, 5₂a; 5₁a, 5₂a; 4₁a, 5₁a which are adjacent to each other in the circumferential direction, as viewed from the top, an interval between the intake valve opening 4₂a functioning as the first valve opening and the exhaust valve opening 5₂a functioning as the second valve opening constitutes a widest interval. Moreover, this widest interval is formed only between the intake valve opening 4₂a and the exhaust valve opening 5₂a. Consequently, the interval between the intake valve opening 4₂a and the exhaust valve opening 5₂a becomes wider than the interval between the intake valve opening 4₁a and the exhaust valve opening 5₁a. Furthermore, the interval between the intake valve opening 4₂a and the exhaust valve opening 5₂a in the orthogonal direction A3 becomes also wider than the interval between the intake valve opening 4₁a and the exhaust valve opening 5₁a in the orthogonal direction A3.

Note that the intervals formed between any two valve openings 4₁a, 4₂a; 4₂a, 5₂a; 5₁a, 5₂a; 4₁a, 5₁a which are adjacent to each other in the circumferential direction mean shortest distances between any two valve openings 4₁a, 4₂a; 4₂a, 5₂a; 5₁a, 5₂a; 4₁a, 5₁a, respectively, as viewed from the top.

Then, with respect to the axial direction A2, the first intake port 4₁, the second intake port 4₂ and the exhaust port 5 including the pair of intake valve openings 4₁a, 4₂a and the pair of exhaust valve openings 5₁a, 5₂a are disposed in the same manner in the end cylinder 1₁ and the intermediate cylinder 1₂, and the end cylinder 1₄ and the intermediate cylinder 1₃, respectively, whereas in the four cylinders 1₁ to 1₄, they are disposed substantially symmetrically with respect to a second central plane P2 which passes a central point in the axial direction A2 of the cylinder head 2 and intersects orthogonally the rotational axes L2, L3 of the cam shafts 25, 26. Then, from the fact that the intake valve opening 4₁a is situated closer to the first central plane P1 than the intake valve opening 4₂a, the pair of intake valve openings 4₁a, 4₂a which are disposed in such a zigzag fashion in each cylinder 1₁ to 1₄ are effective in that a strong swirl is produced in each cylinder 1₁ to 1₄ by intake air which enters from the intake valve opening 4₁a which is situated closer to the first central plane P1.

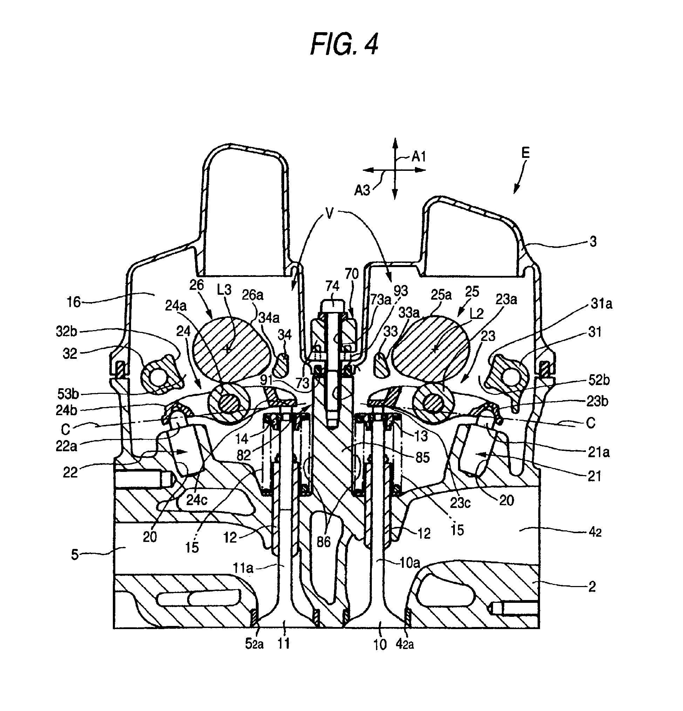

Referring to Fig. 4, in each cylinder 1₁ to 1₄, a pair of engine valves 10 for opening and closing the pair of intake valve openings 4₁a, 4₂a, respectively, and a pair of engine valves 11 for opening the pair of exhaust valve openings 5₁a, 5₂a fit sildably in valve guides 12 fixed to the cylinder head 2, respectively, and are biased in a valve closing direction by virtue of the spring force of valve springs 15 comprising compression coil springs disposed between spring retainers 13, 14 at distal ends of valve stems 10a, 11a and the cylinder head 2. Here, the intake valve 10, the spring retainer 13 and the valve spring 15 constitute an intake valve device, whereas the exhaust valve 11, the spring retainer 14 and the valve spring 15 constitute an exhaust valve device, and the respective intake valve devices and the respective exhaust valve devices constitute engine valve devices of the internal combustion engine E.

A valve gear V accommodated in a valve gear chamber 16 formed by the cylinder head and the cylinder head cover 3 to open and close the respective intake valves 10 and the respective exhaust valves comprises hydraulic lash adjusters 21, 22 installed in accommodating holes 20a, 20b provided in the cylinder head 2, intake rocker arms 23 and exhaust rocker arms 24 having, respectively, rollers 23a, 24a supported rotatably at central portions thereof, an intake camshaft 25 having intake cams 25a which are brought into sliding contact with the rollers 23a and disposed above the intake rocker arms 23, and an exhaust camshaft 26 having exhaust cams 26a which are brought into sliding contact with the rollers 24a and disposed above the exhaust rocker arms 24. The intake rocker arm 23 extending in a direction intersecting orthogonally the axial direction A2 which is the direction of the rotational axes L2, L3 of both the camshafts 25, 26 which are disposed in parallel with each other on a plane intersecting orthogonally the cylinder axis L3 (hereinafter, referred to as an "orthogonal direction A3") is spherically supported on a support portion 21a of the lash adjuster 21 which has a spherical surface at a proximal portion 23b which is one end portion the intake rocker arm 23 and is brought into abutment with a distal end portion of the valve stem 10a of the intake valve 10 at an operating portion 23c which is the other end of the same rocker arm. Similarly, the exhaust rocker arm 24 extending in the orthogonal direction A3 is spherically supported on a support portion 22a of the lash adjuster 22 which has a spherical surface at aproximal portion 24b which is one end portion of the exhaust rocker arm 24 and is brought into abutment with a distal end portion of the valve stem 11a of the exhaust valve 11 at an operating portion 24c which is the other end of the same rocker arm. Here, all the intake rocker arms 23 and exhaust rocker arms 24 are designed with the same specification.

The intake camshaft 25 and the exhaust camshaft 26 which are supported rotatably on the cylinder head 2 via a cam holder H have the rotational axes L2, L3, respectively, which are parallel with a rotational axis of a crankshaft of the internal combustion engine E and is driven to rotate at one-half the crankshaft speed by virtue of the power of the crankshaft which is transmitted via a driving mechanism (not shown) comprising a timing chain. Then, the intake cams 25a and the exhaust cams 26a which rotate together with the intake camshaft 25 and the exhaust camshaft 26, respectively, and which are brought into sliding contact with the rollers 23a, 24a, respectively, actuate the corresponding intake valves 10 and exhaust valves 11 so as to open and close at predetermined timings according to cam profiles formed on cam surfaces thereof.

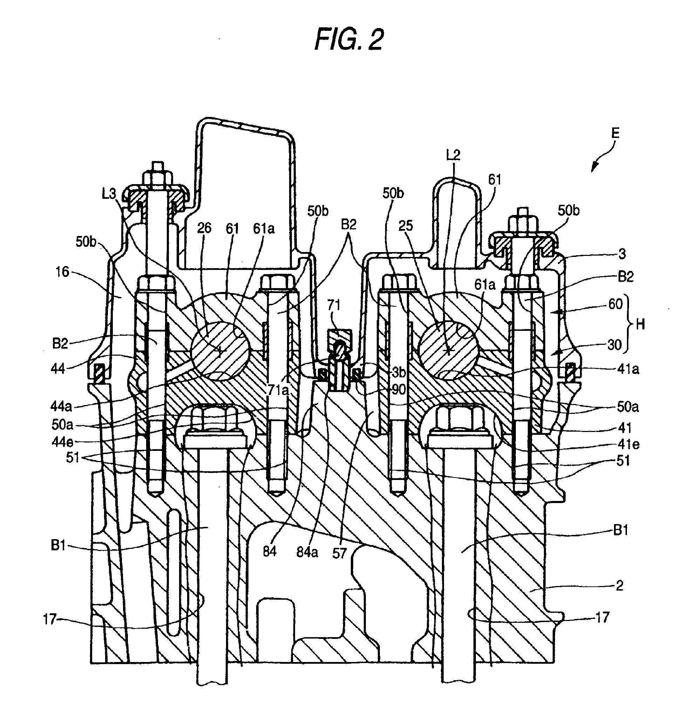

Referring to Fig. 2, the cam holder H provided in the valve gear chamber 16 comprises a lower cam holder 30 which is fastened to the cylinder head 2 and an upper cam holder 60 which is fastened to the lower cam holder 30, and the upper cam holder 60 is fastened to the cylinder head 2 together with the lower cam holder 30 with a plurality of bolts B2.

Referring to Figs. 2, 3 and 5 to 8, the cam holder H will be described further.

Referring to Figs. 5, 6, the lower cam holder 30 is a one-piece cam holder having a frame construction and comprises longitudinal frames 31 to 34 which extend in the axial direction A2 and transverse frames 35 to 38 which are connected to the longitudinal frames 31 to 34 and which extend in the orthogonal direction A3. The longitudinal frames 31 to 34 comprise a pair of outer longitudinal frames 31, 32 which are disposed at an interval in the orthogonal direction A3 and a pair of inner longitudinal frames 33, 34 which are disposed closer to the first central plane P1 relative to the outer longitudinal frames 31, 32, and the outer longitudinal frames 31, 32 and the inner longitudinal frames 33, 34 are parallel with each other. The transverse frames 35 to 38 which are formed integrally with the longitudinal frames 31 to 34 comprise a pair of end transverse frames 35, 36 which connect together both end portions of the outer and inner longitudinal frames 31 to 34 in the axial direction A2, respectively, and two intermediate transverse frames 37,38 which are adjacent to the end transverse frames 35, 36, respectively, at an interval in the axial direction A2 between both the end transverse frames 35, 36 and which connect together the outer and inner longitudinal frames 31 to 34.

Between the outer longitudinal frame 31 which is situated on an intake side relative to the first central plane P1 which is a side where the intake valves 10 reside and the inner longitudinal frame 33, five intake-side lower bearing portions 40 to 42 for rotatably supporting the intake camshaft 25 are disposed at intervals in the axial direction A2 while extending in parallel with one another in the orthogonal direction A3 to thereby be joined to the outer longitudinal frame 31 and the inner integral frame 33 at joining portions J1, J3, whereby the five lower bearing portions are formed integrally with the outer longitudinal frame 31 and the inner longitudinal frame 33. Similarly, between the outer longitudinal frame 32 which is situated on an exhaust side of the first central plane P1 which is a side where the exhaust valves 11 reside and the inner longitudinal frame 34, five exhaust-side lower bearing portions 43 to 45 for rotatably supporting the exhaust camshaft 26 are disposed at intervals in the axial direction A2 while extending in parallel with one another in the orthogonal direction A3 to thereby be joined to the outer longitudinal frame 32 and the inner integral frame 34 at joining portions J2, J4, whereby the five lower bearing portions are formed integrally with the outer longitudinal frame 32 and the inner longitudinal frame 34.

These intake-side and exhaust-side five lower bearing portions 40 to 42; 43 to 45 are formed at positions confronting each other in the orthogonal direction A3 and each comprise two end lower bearing portions 40; 43 which are formed on both the end transverse frames 35, 36, two first intermediate lower bearing portions 41; 44 formed on both the intermediate transverse frames 37; 38, and a second intermediate lower bearing 42; 45 which is situated at a central position between both the first intermediate lower bearing portions 41; 44 in the axial direction A2. Then, both the end lower bearing portions 40; 43 are disposed in the axial direction A2 on the cylinder head 2 at positions closer to the end portions of the cylinder head 2 in the axial direction A2 relative to the end cylinders 1₁, 1₄, the first intermediate lower bearing portions 41; 44 are disposed on the cylinder head 2 at positions corresponding to a portion between the end cylinder 1₁ and the intermediate cylinder 1₂ and a portion between the end cylinder 1₄ and the intermediate cylinder 1₃, and the second intermediate lower bearing portions 42; 45 are disposed on the cylinder head 2 at a position corresponding to a portion between both the intermediate cylinders 1₂, 1₃.

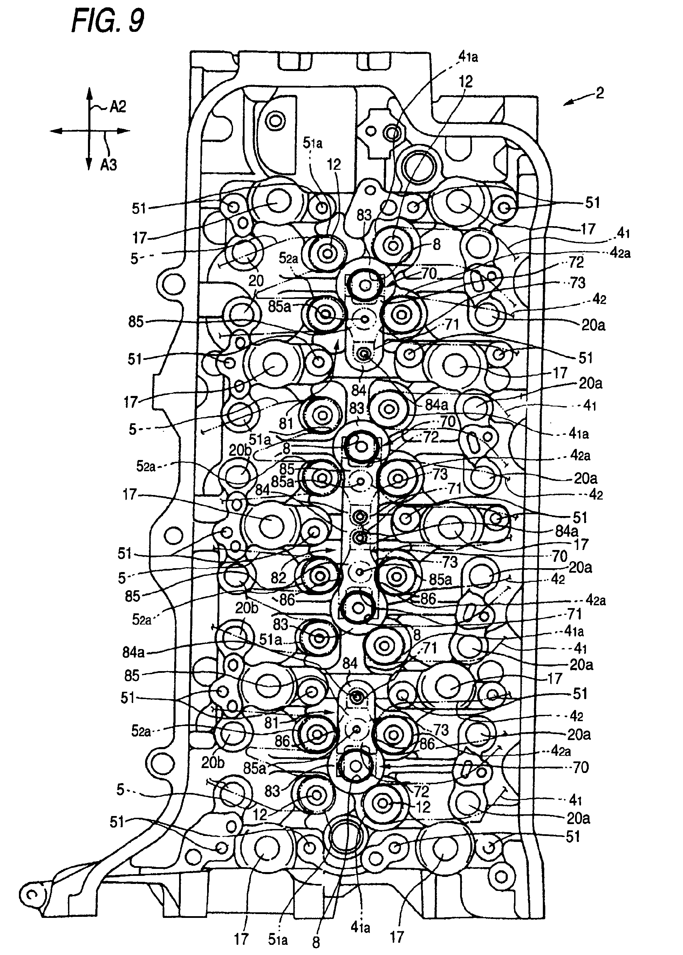

Bosses 46 to 49 functioning as joining portions having through holes 50a through which bolts B2 (refer to Fig. 2) are passed are formed at the joining portions J1, J3; J2, J4 of the outer longitudinal frames 31; 32 with the inner longitudinal frames 33; 34 which are situated at end portions of the respective lower bearing portions 40 to 42; 43 to 45 in the orthogonal direction A3, and bolts B2 which are passed through the through holes 50a screw into threaded holes 51 (refer to Figs. 2, 9) formed in the cylinder head 2, and bolts B3 (refer to Fig. 3) which are passed through joining portions J5, which will be described later, screw into the cylinder head 2, whereby the lower cam holder 30 is fastened to the cylinder head 2.

On the other hand, the upper cam holder 60, which is constituted by divided cam holders, comprises a first end cam holder (not shown) connected to the transverse frame 35 at the one end and having a first intake-side and exhaust-side end upper bearing portion corresponding to both the end lower bearing portions 40; 43, two second end cam holders (not shown) constituting two intake-side and exhaust-side second end upper bearing portions connected, respectively, to both the end lower bearing portions 40, 43 on the end transverse frame 36 at the other end and six intermediate cam holders constituting six intake-side and exhaust-side intermediate upper bearing portions 61 connected, respectively, the first and second intermediate lower bearing portions 41, 42, 44, 45.

Semi-cylindrical bearing grooves 40a to 45a are formed on the respective lower bearing portions 40 to 45 of the lower cam holder 30 so that the semi-cylindrical bearing grooves 40a to 45a form bearing bores for supporting rotatably journal portions of the respective camshafts 25, 26 in cooperation with semi-cylindrical bearing grooves formed on the first end upper bearing portion, the second end upper bearing portions and the intermediate upper bearing portions 61 of the upper cam holder 60 (bearing grooves 61a on the intermediate upper bearing portions 61 are shown in Fig. 2) when the upper cam holder 60 is fastened to the lower cam holder 30.

The first and second end upper bearing portions and respective intermediate upper bearing portions 61 are fastened to the cylinder head 2 together with the lower cam holder 30 with bolts B2 which are passed through pairs of through holes 50 (pairs of through holes 50b in the intermediate upper bearing portions 61 are shown in Fig. 2) which are situated in the orthogonal direction A3 so as to hold therebetween the intake camshaft 25 or the exhaust camshaft 26 that is passed through the bearing bores and are further inserted into pairs of through holes 50a which are situated in the respective lower bearing portions 40 to 45 in the orthogonal direction A3 so as to hold therebetween the intake camshaft 25 or the exhaust camshaft 26. Consequently, five intake-side bearing portions are constructed by the first and second end upper bearing portions and respective intermediate upper bearing portions 61 which are fastened to the corresponding intake-side lower bearing portions 40 to 42, and five exhaust-side bearing portions are constructed by the first and second end upper bearing portions and respective intermediate bearing portions 61 which are fastened to the corresponding exhaust-side lower bearing portions 43 to 45.

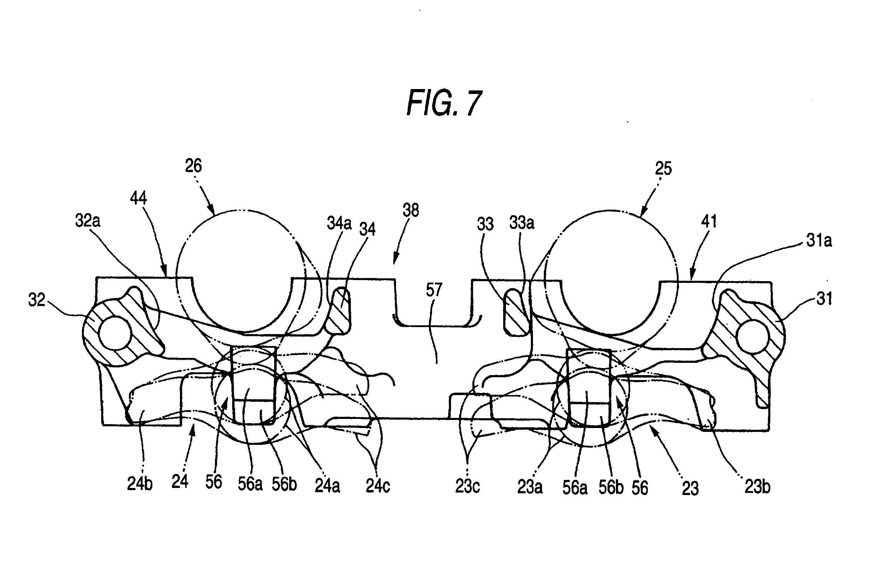

Furthermore, an intake-side accommodating space 52 for partly accommodating the two intake rocker arms 23 and the two intake cams 25a which are disposed at intervals in the axial direction A2, respectively, and an exhaust-side accommodating space 53 for partly accommodating the two exhaust rocker arms 24 and the two exhaust cams 26a which are disposed at intervals in the axial direction A2, respectively, are formed for each cylinder 1₁ to 1₄ by being surrounded by the lower bearing portions 40, 41; 41, 42; 43, 44; 44, 45 which are adjacent to each other in the axial direction and the outer longitudinal frames 31, 32 and the inner longitudinal frames 33, 34. Then, the respective accommodating spaces 52, 53 constitute through spaces which are open to the lower and upper surfaces of the lower cam holder 30 to thereby extend through the lower cam holder 30. In addition, as shown in Fig. 7, surfaces 31a to 34a of the outer longitudinal frames 31, 32 and the inner longitudinal frames 33, 34 which face the accommodating spaces 52, 53 are formed into concave surfaces which follow rotating paths or trajectories of the respective rotating cams 25a, 26a, whereby since the intervals between the respective longitudinal frames in the orthogonal direction A3 can be reduced while interferences between the longitudinal frames 31 to 34 and the cams 25a, 26a are avoided, the width of the lower cam holder 30 in the orthogonal direction and hence the width of the cylinder head 2 can be reduced.

Then, the accommodating spaces 52, 53 are divided, respectively, into two small through spaces or intake-side small accommodating spaces 52a, 52b and exhaust-side small accommodating spaces 53a, 53b by an intake-side partitioning portion 54 and an exhaust-side partitioning portion 55 which are integrally formed when they extend in the orthogonal direction A3 in parallel with the respective lower bearing portions 40 to 45 to thereby connect to the outer longitudinal frames 31; 32 and the inner longitudinal frames, respectively, at joining portions J5, J7; J6, J8, and part of each intake rocker arm 23 or part of each exhaust rocker arm 24 is accommodated in each small accommodating space 52a, 52b; 53a, 53b. Consequently, for each cylinder 1, the respective partitioning portions 54, 55 are disposed between the rocker arms 23, 24 which are adjacent to each other in the axial direction A2 in such a manner as to overlap the rocker arms 23, 24 as viewed in the axial direction A2 (refer to Fig. 3).

As shown in Figs. 5, 6, projections 56 are integrally formed on the respective lower bearing portions 40 to 45 and the respective partitioning portions 54, 55 in such a manner as to project in the axial direction A2 from respective sides of the lower bearing portions 40 to 45 and partitioning portions 54, 55 which face the small accommodating spaces 52a, 52b; 53a, 53b toward the rocker arms 23, 24.

Then, referring to Fig. 7 in which the positions of the rocker arms 23, 24 when the intake valve 10 and the exhaust valve 11 are closed are shown by double-dash lines and the positions of the rocker arms 23, 24 when the intake valve 10 and the exhaust valve 11 are lifted to the maximum are shown by chained lines, each projection 56 is situated at a central portion of the rocker arm 23, 24 to thereby face the roller 23a, 24a in the axial direction A2 and has a restricting surface 56a comprising a plane which intersects orthogonally the rotational axis L2, L3 of the camshaft 25, 26 and a guide surface 56b comprising an inclined plane which continues to a lower end of the restricting surface 56a and recedes from the restricting surface 56a toward the cylinder head 2 situated below to thereby be closer to the side of the lower bearing portion 40 to 45 or the partitioning portion 54, 55 and which is made parallel in the orthogonal direction A3.

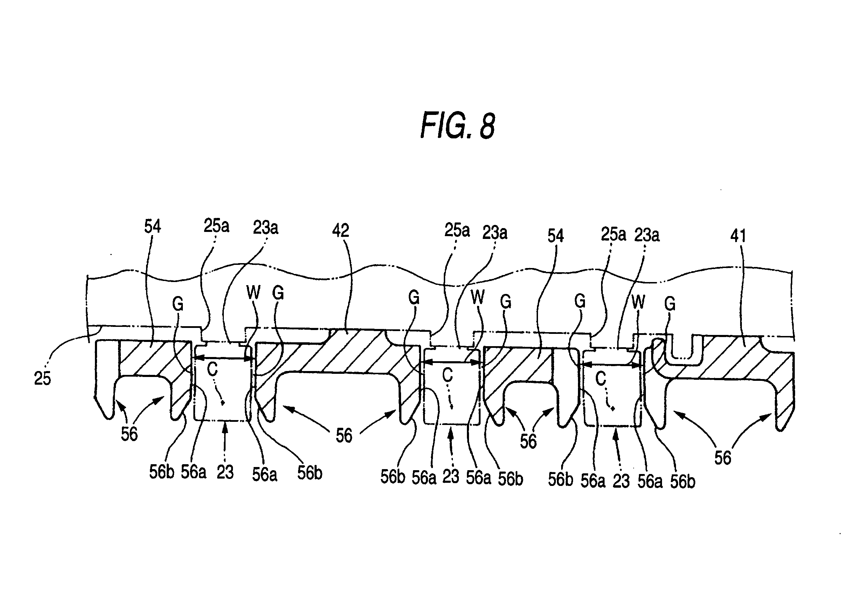

Referring to Fig. 8, as well, the restricting surfaces 56a of the pair of projections 56 which are provided on the lower bearing portion 40 to 45 and the partitioning portion 54, 55, respectively, so as to confront each other with the rocker arm 23, 24 being held therebetween are provided so as to confront each other with a slight gap G being held relative to sides of each rocker arm 23, 24 in the axial direction when the rocker arm 23, 24 is assembled to the cylinder head 2 so that the proximal portion 23b, 24b is spherically supported on the support portion 21a, 22a whereas the operating portion 23c, 24c abuts with the intake valve 10 or the exhaust valve 11 in a state in which the rocker arm 23, 24 accommodated in the small accommodating space 52a, 52b, 53a, 53b is allowed to occupy a set position which is set preliminarily or a position where the rocker arm 23, 24 is not inclined (while the intake rocker arm 23 is shown in Fig. 8, it is true with the exhaust rocker arm 24) as when the cam 25a, 26a of the camshaft 25, 26 assembled to the cylinder head 2 abuts with the roller 23a, 24a of the rocker arm 23, 24, and the lower cam holder 30 is assembled to the cylinder head 2 at a predetermined position so that the through holes 50a align with the screwed holed 51. In addition, a gap between the guide surfaces 56b of the pair of projections 56 in the axial direction A2 is equal to an interval W that is formed between the restricting surfaces 56a in the axial direction A2 at its minimum and the gap increases as the guide surfaces 56b extend so as to be closer to the cylinder head 2 (or more downwardly).

In a case where the rocker arm 23, 24 is inclined and deviates relative to the interval W between, for example, the pair of restricting surfaces 56a to such an extent that the rocker arm 23, 24 is not accommodated within the interval W when the lower cam holder 30 is assembled to the cylinder head 2 from above the rocker arm 23, 24 that has been assembled to the cylinder head 2, each guide surface 56b is intended to guide the rocker arm 23, 24 so as to be accommodated within the interval W between the restricting surfaces 56a when the rocker arm 23, 24 first comes to contact the guide surface 56b forming a wider interval than the interval W formed between the pair of the restricting surfaces 56a in cooperation with the guide surface 56b of the adjacent projection 56 to thereby correct the deviation.

Then, in the state in which the lower cam holder 30 is assembled to the cylinder head 2 at the predetermined position, when the rocker arm 23, 24 attempts to incline around a fall center line C (refer to Fig. 4, as well) which connects a swiveling center of the support portion 21a, 22a with an abutment portion of the operating portion 23c, 24c with the valve stem 10a, 11a in a state in which the camshaft 25, 26 is not in contact with the roller 23a, 24a, after having inclined through a predetermined angle to correspond to the gap G, the rocker arm 23, 24 contacts the restricting surface 56a of the projection 56 and inclines larger than the predetermined angle, whereby the fall of the rocker arm 23, 24 is prevented. Note that the predetermined angle is an angle through which the inclined rocker arm 23, 24 is corrected so as to occupy the set position through the contact between the cam 25a, 26a and the roller 23a, 24a when the camshaft 25, 26 is assembled. Thus, each projection 56 constitutes a fall preventing device for preventing the fall of the rocker arm 23, 24 in the axial direction through the contact with the rocker arm 23, 24.

Referring to Figs. 1, 5, 6, each intermediate transverse frame 37, 38 has a connecting wall 57 connected to bosses 47, 49 of the first intermediate lower bearing portions 41, 44 between the pair of inner longitudinal frames 33, 34 and hence between both the camshafts 25, 26 in the orthogonal direction A3. On the connecting wall 57, a wall surface 57a on a side which faces a clamp 70 for fixing the fuel injection valve 6 corresponding to the end cylinder 1₁, 1₄ and an end fixing seat 81 to which the clamp 70 is fixed (both the clamp 70 and the fixing seat 81 will be described later) has a cylindrical surface having a center axis which extends along the cylinder axis L1 and is formed into a concave shape, and a wall surface 57b on a side which faces the fuel injection valve 6 or the cylinder axis L1 corresponding to the intermediate cylinder 1₂, 1₃ has a cylindrical surface having a center axis which extends along the cylinder axis L1 and is formed into a convex shape. Due to this, a concave accommodating portion 58 is formed in the connecting wall 57 which opens in the axial direction A2 toward the fuel injection valve 6 the clamp 70 or the end fixing seat 81 corresponding to the end cylinder 1₁, 1₄, whereby the connecting wall 57 becomes a curved wall which curves such that the accommodating portion 58 side is concaved.

Thus, due to the fact that the connecting wall 57 is formed into the curved wall having the concave wall surface 57a and the convex wall surface 57b, the reduction in thickness of the connecting wall 57 in the axial direction A2 is suppressed, thereby making it possible to suppress the reduction in rigidity of the connecting wall 57.

Then, referring to Figs. 1 to 5, 9, a table-like fixing seat 80 for fixing the fuel injection valves 6 to the cylinder head 2 with the clamps 70 in a state in which the lower cam holder 30 and the upper cam holder 60 are fastened to the cylinder head 2 is formed integrally on the cylinder head 2 between both the inner longitudinal frames 33, 34 in such a manner as to protrude upwardly in the cylinder axial direction A1 or in such a manner as to extend toward the cylinder head cover 3. The fixing seat 80 defining the insertion holes 8 (refer to Fig. 3, as well) into which the fuel injection valves 6, which face the combustion chambers from the lower surface of the cylinder head 2 at the centers of the respective cylinders 1₁ to 1₄ as viewed from the top, are inserted, is disposed so as to extend along in the axial direction A2 between both the camshafts 25, 26, as viewed from the top. Then, this fixing seat 80 includes two end fixing seats 81 situated between the end transverse frames 35, 36 and the connecting wall 57, respectively, and an intermediate fixing seat 82 situated between the two connecting walls.

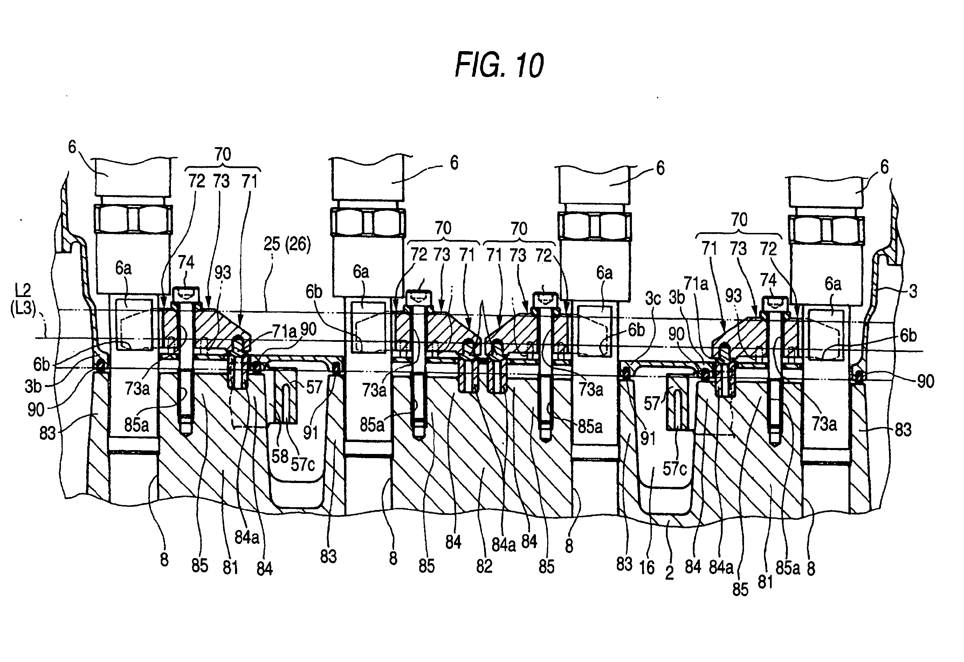

The fuel injection valves 6, which are disposed to correspond to the cylinders 1₁ to 1₄ individually, are fixed to the cylinder head 2 at the respective end fixing seats 81 and the intermediate fixing seat 82 with the clamps 70. Referring to Fig. 10, as well, each clamp 70, which is disposed outside the valve gear chamber 16 above the cylinder head cover 3 and is disposed along the axial direction A2 between both the camshafts 25, 26, as viewed from the top, to extend in the axial direction A2, is designed with the same specifications with respect to every aspect. The clamp 70 has a supported portion 71 which is constituted by an end portion of the clamp 70 and is supported on the fixing seat 81, 82, a bifurcated presser portion 72 which is constituted by the other end portion of the clamp 70 to press the fuel injection valve 6 against the cylinder head 2 and a fastening portion 73 provided between the supported portion 71 and the presser portion 72 and having a through hole 72 through which a bolt 74 is passed. Note that in this embodiment, each clamp 70 is disposed in the cylinder axial direction Alsuch that substantially the whole of the clamp 70 overlaps both the camshafts 25, 26, as viewed from the orthogonal direction A3.

The supported portion 71 has a fulcrum portion 71a comprising a projection and is supported on a support portion 84, which will be described below, when the fulcrum portion 71a comes into abutment with a receiving portion 84a being a cylindrical member provided on the fixing seat 81, 82 in such a manner as to protrude from an upper surface of the fixing seat. On the other hand, a detent portion 6a comprising two planes which confront each other in a diametrical direction and a shoulder portion 6b are formed on the fuel injection valve 6 by cutting out part of a side thereof, and the presser portion 72 comes into engagement with the detent portion 6a and the shoulder portion 6b of the fuel injection valve 6. Note that a connecting portion 6c with a fuel pipe and a coupler 6d to which a signal wire for sending driving signals to the fuel injection valve 6 is connected are provided on the fuel injection valve 6.

Then, the presser portion 72 presses the fuel injection valve 6 against the cylinder head 2 with the fulcrum portion 71a of the supported portion 71 functioning as a fulcrum when each clamp 70 is tightened with a bolt 74 which screws into a threaded hole 85a formed in the fixing seat 81, 82, whereby the furl injection valve 6 is fixed to the cylinder head 2.

On the other hand, each end fixing seat 81 has an insertion portion 83 which is constructed by one end portion thereof and in which the insertion hole 8 is formed, the support portion 84 which is constructed by the other end portion thereof and has the receiving portion 84a adapted to be brought into abutment with the fulcrum portion 71a of the supported portion 71 of the clamp 70 for supporting the clamp 70 and a connecting portion 85 which is provided between the insertion portion 83 and the support portion 84 and in which the threaded hole 85a into which a bolt 74 is screwed is formed so as to correspond to a through hole 73a in the clamp 70.

Then, as viewed from the top, each end fixing seat 81 extends from the insertion portion 83 in the axial direction A2 toward the connecting wall 57 while passing through between the intake valve opening 4₂a and the exhaust valve opening 5₂a which form the widest interval therebetween and further between the second intake port 4₂ and the exhaust port 5, whereby the support portion 84 and the receiving portion 84a of each end fixing seat 81 are partially accommodated in the accommodating portion 58.

The intermediate fixing seat 82, to which two of the fuel injection valves 6 are fixed, has a pair of insertion portions 83, a pair of support portions 84 and connecting portions 85. The pair of insertion portions 83 are provided at end portions of the intermediate fixing seat 82 so as to correspond to the intermediate cylinders 1₂, 1₃, respectively, and respectively form insertion holes 8. The pair of support portions 84 are provided at a central portion of the intermediate fixing seat 82 and have receiving portions 84a adapted to be brought into engagement with fulcrum portions 71a of supported portions 71, respectively, so as to support two clamps 70. The connecting portions 85 are each provided between the insertion portion 83 and the support portion 84 so as to correspond, respectively, to the fuel injection valves 6 which correspond, in turn, to both the intermediate cylinders 1₂, 1₃, respectively, and have threaded holes 85a so that bolts 74 are allowed to screw thereinto, respectively. Then, the intermediate fixing seat 82 is positioned close to the intermediate cylinders 1₂, 1₃, as viewed from the top between the pair of insertion portions 83, and then extends in the axial direction A2 while passing between the exhaust valve opening 5₂a and the intake valve opening 4₂a which forms the widest interval therebetween, then, between the second intake port 42 and the exhaust port 5, and between both the lower bearing portions 42, 45 where no wall is provided which connects the intake-side second intermediate lower bearing portion 42 and the exhaust-side second intermediate lower bearing portion 45.

As shown in Figs. 1, 4, 5, 9, in a portion of each fixing seat 81, 82 interposed between the intake valve 10 for opening and closing the intake valve opening 42a and the exhaust valve 11 which faces the intake valve in the orthogonal direction A3, recessed portions 86 for avoiding the contact of the fixing seat 81, 82 with the valve springs 15 and the valve retainers 13, 14 are formed on sides of the fixing seat 81, 82 which face the intake valve 10 and the exhaust valve 11 in the orthogonal direction A3. Then, part of the valve spring 15 and the spring retainer 13 of the intake valve 10 are accommodated in the recessed portion on the intake side.

Furthermore, on each fixing seat 81, 82, the insertion portion 83, the connecting portion and the support portion 84 are disposed in the axial direction A2, and similarly, on the clamp 70 that is fixed to each fixing seat 81, 82, the presser portion 72, the fastening portion73 and the supported portion 71 are disposed in the axial direction A2. Thus, each fixing seat 81, 82 extends in the axial direction A2 and has an elongate shape in the axial direction A2 so as to correspond to the clamp 70 which extends in the axial direction A2 and has an elongate shape in the axial direction. Then, portions of the clamp 70 where the supported portion 71 and the fastening portion 73 are formed constitute fixed portions when the clamp 70 is fixed to the fixing seat 81, 82. And, portions of each fixing seat 81, 82 where the support portion 84 and connecting potion 85 which correspond, respectively, to the supported portion 71 and the fastening portion 73 are formed constitute the fixing portions of the fixing seat 81, 82 to which the fixed portions of the clamp 70 are fixed. Then, as has been described previously, part of the support portion 84 and the receiving portion 84a and hence part of the fixing portions are accommodated in the accommodating portion 58.

As shown in Fig. 2, when in a condition in which it secures the fuel injection valve 6, the clamp 70 is located at a position where the clamp 70 overlaps the intake-side bearing portion and the exhaust-side bearing portion in the orthogonal direction A3, whereby the enlargement in size of the cylinder head 2 and hence the internal combustion engine E in the cylinder axial direction A1 is suppressed. Then, the four fuel injection valves 6 are disposed symmetrical with respect to the second central plane P2 (refer to Fig. 5), and the four clamps 70, two end fixing seats 81 and the intermediate fixing seat 82 are also disposed symmetrical with respect to the second central plane P2.

Referring to Figs. 1, 5, 9, the supported portion 71 and the fastening portion 73 of the clamp 70 fixed to each end fixing seat 81 are disposed closer to the intermediate cylinder 1₂, 1₃ or the second central plane 2 with respect to the presser portion 72. Furthermore, the clamp 70 fixed to each end fixing seat 81 extends, as viewed from the top, from the insertion portion 83 toward the connecting wall 57 in the axial direction A2 while passing through between the intake valve opening 4₂a and the exhaust valve opening 5₂a which form the widest interval therebetween and further between the second intake port 4₂ and the exhaust port 5. Then, part of the supported portion 71 of the clamp 70 fixed to each end fixing seat 81 occupies a position where the part overlaps the accommodating portion 58 in the axial direction A2, as viewed from the top.

In addition, the two clamps 70 which secure the fuel injection valves 6 corresponding, respectively, to the intermediate cylinders 1₂, 1₃ extend in the axial direction A2, while passing through between the intake valve opening 4₂a and the exhaust valve opening 5₂a which form the widest interval therebetween and further between the second intake port 4₂ and the exhaust port 5, so that the two clamps 70 confront each other via a slight gap in the axial direction A2 relative to the intermediate fixing seat 82 which extends in the axial direction A2 between both the second intermediate lower bearing portions 42, 45 so as to straddle both the intermediate cylinders 1₂, 1₃ without a wall positioned therebetween which connects together both the second intermediate lower bearing portions 42, 45 as viewed from the top.

Referring to Figs. 2 to 4, 10, since the clamp 70 is disposed outside the cylinder head cover 3, a central portion of the cylinder head cover 3 in the orthogonal direction A3 is formed into something like a flange which constitutes a seal portion for preventing the leakage of fluid from the valve gear chamber 16 through gaps between the fuel injection valve 6, the bolt 74 and the receiving portion 84a which are provided so as to extend through the cylinder head cover 3 from the exterior to the interior of the valve gear chamber 16 and the cylinder head cover 3.

The seal portion comprises two end seal portions 3b and an intermediate seal portion 3c. To be specific, for each end fixing seat 81, an annular seal member 90 surrounding the fuel injection valve 6, the bolt 74 and the receiving portion 84a is held in an annular installation groove formed in a surface of the end seal portion 3b which faces the end fixing seat 81 (or a lower surface thereof) so as to be brought into contact with a seat surface of the end fixing seat 81 (or an upper surface thereof) in such a manner as to maintain airtightness. In addition, for the intermediate fixing seat 82, an annular seal member 91 which surrounds the pair of fuel injection valves 6, the pair of bolts 74 and the pair of receiving portions 84a is held in an annular installation groove formed in a surface of the intermediate seal portion 3c on a side which faces the intermediate fixing seat 82 (or a lower surface thereof) so as to be brought into contact with a seat surface of the intermediate fixing seat 82 (or an upper surface thereof) in such a manner as to maintain airtightness.

As shown in Figs. 3, 5, a curved recessed portion 33b is formed on a side of the intake-side internal longitudinal frame 33 which is closer to the first central plane P1 for forming a gap between the insertion portion 83 of each fixing seat 81, 82 in which the insertion hole 8 for the fuel injection valve 6 is formed and an insertion cylinder 3a formed in the cylinder head cover 3 for the fuel injection valve 6. Thus, the contact between the members disposed within the valve gear chamber 16 or the insertion portions 83 of the respective fixing seats 81, 82 and the internal longitudinal frame 33 that would occur in the cylinder head 2 made smaller in size due to vibrations generated during the operation of the internal combustion engine E is prevented.

As shown in Fig. 6, a recessed portion 57d for accommodating the spring retainer 13 which is a constituent member of the engine valve device including the intake valve 10 for opening and closing the intake valve opening 41a corresponding to the intermediate cylinder 1₂, 1₃ is provided on a lower surface of the connecting wall 57 on the side thereof which faces the cylinder axis L1 of the intermediate cylinder 1₂, 1₃ or where the connecting wall 57 is formed into the convex shape, namely on the wall surface 57b side of the connecting wall 57, and furthermore, excess metal cut-away portions 57c are provided in the connecting wall 57 so as to be located between the recessed portion 57d and both the bosses 47, 49 except for a portion in the vicinity of the recessed portion 57d. Then, the adjacent intermediate cylinders 1₂, 1₃ can be disposed close to each other by the provision of the excess metal cut-away portions 57c, whereby the internal combustion engine E can be made small in size in the axial direction A2, and on top of that, the connecting wall 57 can be made lighter in weight while securing the rigidity thereof.

In addition, as shown in Figs. 2, 6, recessed portions 40e to 45e for accommodating a head portion of a head bolt B1 which is passed through a through hole 17 (refer to Fig. 9, as well) in the cylinder head 2 are formed in lower surfaces of the respective lower bearing portions 40 to 45 or surfaces thereof which face the cylinder head 2 between the respective lower bearing portions 40 to 45 and the cylinder head 2, whereby since the lower bearing portions 40 to 45 and the head bolts B1 can be disposed such that they overlap each other in the cylinder axial direction A1, the cylinder head 2 can be made smaller in size in the axial direction.

Next, the operation and advantages of the embodiment that is constructed as has been described heretofore will be described.

In assembling the respective camshafts 25, 26 to the cylinder head 2, firstly, the respective rocker arms 23, 24 are assembled to the cylinder head 2 such that the proximal portions 23b, 24b are spherically supported on the support portions 21a, 22a of the lash adjusters 21, 22, whereas the operating portions 23c, 24c are brought into abutment with the distal ends of the valve stems 10a of the intake valves 10 or the valve stems 11a of the exhaust valves 11. Thereafter, the lower cam holder 30 is assembled to the predetermined position on the upper surface of the cylinder head 2 from above the cylinder head 2. In assembling the lower cam holder 30 to the cylinder head 2, even in the event that for example, the rocker arms 23, 24 incline more largely than the predetermined angle, or the lower cam holder 30 deviates from the predetermined position in the axial direction A3 before the lower cam holder 30 is assembled, whereby the rocker arms 23, 24 and the lower cam holder 30 deviate in the axial direction A2 to such an extent that the rocker arms 23, 24 cannot be accommodated in the intervals W formed in the axial direction A2 between the pairs of restricting surfaces 56a, the rocker arms 23, 24 are guided while in contact with the guide surfaces 56b when the low cam holder 30 is moved downwardly, whereby the rocker arms 23, 24 slide in between the restricting surfaces 56a, respectively. Then, when the lower cam holder 30 is assembled to the predetermined position on the cylinder head 2, the respective rocker arms 23, 24 are positioned between the pairs of restricting surfaces 56a within the small accommodating spaces 52a, 52b, 53a.

Next, the camshafts 25, 26 come into abutment with the rollers 23a, 24a of the rocker arms 23, 24 to which the respective cams 25a, 26a correspond from above the rocker arms 23, 24 and the lower cam holder 30 and is positioned such that the journal portions of the respective camshafts 25, 26 fits in the bearing grooves 40a to 45a in the corresponding lower bearing portions 40 to 45. Furthermore, the first and second end upper bearing portions and the intermediate upper bearing portions 61 which are formed on the upper cam holder 60 are fastened to the cylinder head 2 with the bolts B2 together with the lower cam holder 30 and come to confront the lower bearing portions 40 to 45, whereby the camshafts 25, 26 are assembled to the cylinder head 2.

Then, the intermediate transverse frames 37, 38 which connect the outer longitudinal frames 31, 32 with the inner longitudinal frames 33, 34 are provided on the lower cam holder 30, and moreover, the inner longitudinal frames 33, 34 to which one end portions of the first and second intermediate lower bearing portions 41, 42; 44, 45 are connected are also provided on the lower cam holder 30, whereby the rigidity of the lower cam holder 30 is increased. In particular, a rigidity required for the second intermediate lower bearing portions 44, 45 which are not connected to each other is ensured by the provision of the inner longitudinal frames 33; 34.

Furthermore, since the outer longitudinal frames 31, 32 and the inner longitudinal frames 33, 34 which are connected to the lower bearing portions 40, 41; 41, 42; 43, 44; 44, 45 which are adjacent in the axial direction A2 are connected to each other by the partitioning portions 54, 55 which extend in parallel with the lower bearing portions 40 to 45 between the adjacent lower bearing portions 40, 41; 41, 42; 43, 44; 44, 45 on the lower cam holder 30, the rigidity of the lower cam holder 30 is enhanced irrespective of the fact that the upper cam holder 60 which is a camshaft support member joined to the lower cam holder 30 to support the camshafts 25, 26 rotatably comprises the separate intermediate cam holders 61 on the intake side and the exhaust side except for the end cam holders.

The four valve openings including the two intake valve openings 4₁a, 4₂a and the two exhaust valve openings 5₁a, 5₂a which correspond to each cylinder are disposed around the fuel injection valve 6 at intervals in the circumferential direction. Each clamp 70 is disposed, as viewed from the top, between the intake valve opening 4₂a and the exhaust valve opening 5₂a which are only the adjacent valve openings that forms the widest opening therebetween. Thus, since each clamp 70 is disposed, as viewed from the top, between the intake valve opening 4₂a and the exhaust valve opening 5₂a by making use of the widest interval which is formed only between the intake valve opening 4₂a and the exhaust valve opening 5₂a of the intervals formed between any two of the valve openings 4₁a, 4₂a; 4₂a, 5₂a; 5₁a, 5₂a; 4₁a, 5₁a which are adjacent in the circumferential direction, each clamp 70 and hence the cylinder head 2 do not have to be enlarged in size with a view to forming the clamp 70 into a shape which can avoid the interference between the clamp 70 and the intake and exhaust valve devices, thereby making it possible to make each clamp 70 and hence the cylinder head 2 smaller in size. Furthermore, a risk can be reduced or avoided that the clamp 70 imposes a limitation on the layout of the intake valve opening 4₂a or the exhaust valve opening 5₂a to thereby damage the intake and exhaust characteristics.

Relative to the internal combustion engine E having the first and second intake ports 4₁, 4₂ which are designed such that the pair of intake valve openings include the two intake valve openings 4₁a, 4₂a disposed on the one side relative to the plane including the cylinder axis L1 and the two exhaust valve openings 5₁a, 5₂a disposed on the other side, and that the intake valve opening 4₁a is disposed closer to the first central plane P1 than the intake valve opening 4₂a so as to be located the different distance from the first central plane P1 or be disposed in the zigzag fashion to thereby produce a strong swirl, each clamp 70 is disposed between of the two intake valve openings 4₁a, 4₂a which are disposed as has been described above, the intake valve opening 4₂a which is disposed more distant from the first central plane P1 than the intake valve opening 4₁a and the exhaust valve opening 5₂a by making use of the widest interval formed between these two valve openings, whereby since the cylinder head 2 can be made smaller in size in the orthogonal direction A3 and, moreover, the restriction imposed by the clamp 70 on the layout of the intake valve openings 4₁a, 4₂a can be avoided, it is possible to avoid a possibility that each clamp 70 imposes the restriction on the layout of the intake valve openings 4₁a, 4₂a, in particular, the layout of the intake valve opening 4₁a which produces a strong swirl to thereby damage the intensity of a swirl produced in the cylinder 1₁ to 1₄, thereby making it possible to obtain a good combustibility.

The recessed portions 86 for avoiding the interference, respectively, with the valve spring 15 and the spring retainer 13 of the intake valve 10 for opening and closing the intake valve opening 4₂a and the valve spring 15 and the spring retainer 14 of the exhaust valve 11 for opening and closing the exhaust valve opening 5₂a are provided on each fixing seat 81, 82 which are provided between, as viewed from the top, the intake valve opening 4₂a and the exhaust valve opening 5₂a on the cylinder head 2 in such a manner as to protrude upwardly in the cylinder axial direction A1. Thus, since there occurs no contact between the portion from the insertion portion 83 to the connecting portion 85 on each fixing seat 81, 82 and the valve springs 15 and the spring retainers 13, 14 attributed to vibrations generated during the operation of the internal combustion engine E and in addition, the valve springs 15 and the spring retainers 13, 14 can be disposed close to each fixing seat 81, 82 in the orthogonal direction A3, the cylinder head 2 can be made small in size in the orthogonal direction A3. Furthermore, since the valve spring 15 and the valve retainer 13 of the intake valve 10 are partially accommodated in the recessed portion 86, the valve spring 15 and the spring retainer 13 or the intake valve can be disposed closer to each fixing seat 81, 82 and then to the first central plane P1 to that extent, whereby the cylinder head 2 can be made small in size in the orthogonal direction A3.

Moreover, since the intake valve opening 4₂a and the exhaust valve opening 52a can be disposed close to each other irrespective of the fact that the clamp 70 is disposed between, as viewed from the top, the intake valve opening 4₂a and the exhaust valve opening 5₂a, in this respect, too, the restriction imposed by the clamp 70 on the lay out of the intake valve opening 4₂a or the exhaust valve opening 5₂a can be suppressed further.

The intake valve openings 4₁a, 4₂a and the exhaust valve openings 5₁a, 5₂a of the respective cylinders 1₁ to 1₄ which constitute the line of cylinders are disposed substantially symmetrically with respect to the second central plane P2, and the supported portion 71 and the fastening portion 73, which are fixed to the end fixing seat 81, of the clamp 70 having the presser portion 72 which presses against the fuel injection valve 6 corresponding to the end cylinder 1₁, 1₄ are disposed closer to the center of the cylinder head 2 or to the second central plane P2 passing through the central point of the cylinder head 2 in the axial direction A2 than the presser portion 72, or for the end cylinder 1₁, 1₄, the intake valve opening 4₂a and the exhaust valve opening 5₂a are disposed closer to the second central plane P2 relative to the remaining intake valve opening 4₁a and exhaust valve opening 5₁a. Thus, since the clamp 70 is disposed so as to extend from the fuel injection valve 6 toward the second central plane P2 for each end cylinder 1₁, 1₄, there is no possibility that the clamp 70 protrudes from the end portion of the cylinder head 2 on the opposite side to the second central plane P2, namely, from the end portion of the cylinder head 2 in the axial direction A2, and thus, the cylinder head 2 and hence the internal combustion engine E can be made small in size in the axial direction A2.

Furthermore, in the cylinders 1₁, 1₄ disposed in line, since the first and second intake ports 4₁, 4₂ including both the intake valve openings 4₁a, 4₂a are disposed substantially symmetrically with respect to the second central plane P2, the variation in intensity of produced swirls between the cylinders 1₁ to 1₄ can be reduced.

The accommodating portion 58 which opens in the axial direction A2 so as to accommodate the support portion 84 and the receiving portion 84a of the end fixing seat 81 is formed on each connecting wall 57 which connects together the bosses 47, 49 which are respectively the joining portions of the intake-side and exhaust-side lower bearing portions 40 to 45 to the cylinder head 2. Accordingly, since the intervals in the axial direction A2 between the intake-side bearing portions which are adjacent to each other and the exhaust-side bearing portions which are adjacent to each other can be made smaller than the intervals in the axial direction between the bearing portions that are restricted by the length of the clamp in the axial direction of the camshaft of an internal combustion engine according to the related art to such an extent that part of the end fixing seat 81 is accommodated in the accommodating portion 58, the internal combustion engine E can be made small in size in the axial direction A2. Since the connecting wall 57 is connected to the bosses 47, 49, the fastening rigidity at the bosses 47, 49 which are the fastening portions of the bolts B2 is increased, whereby the fastening force can be increased. Further, the reduction in rigidity of the connecting wall 57 can be avoided irrespective of the formation of the accommodating portion, thereby making it possible to suppress the vibrations of the connecting wall 57 to thereby prevent the interference between the connecting wall 57 and a member disposed in the vicinity of the connecting wall 57, for example, the spring retainer 13 which is a constituent member of the intake valve device adapted to be accommodate in the recessed portion 57d of the connecting wall 57.

In the internal combustion engine E including the four cylinders 1₁ to 1₄ which are arranged in line, the supported portion 71 which is the fixed portion and the fastening portion 73 of the clamp 70 for the fuel injection valve 6 corresponding to the end cylinder 1₁, 1₄ are disposed so as to be situated closer to the intermediate cylinder 1₂, 1₃ or the second central plane P2 relative to the presser portion 72 of the clamp 70, and the connecting wall 57 is constituted by the curved wall which forms the accommodating portion 58 by forming the accommodating portion 58 side thereof into the concave shape, whereby since the accommodating portion 58 is situated closer to the intermediate cylinder 1₂, 1₃, there is caused no risk that the connecting wall 57 comprising the curved wall protrudes in the axial direction A2 from the end portion of the cylinder head 2 in the axial direction A2, and thus, the cylinder head 2 and hence the internal combustion engine E can be made small in size in the axial direction A2.

Since there is no wall connecting the second intermediate lower bearing portions 42, 45, the supported portions 71 of the clamps 70 corresponding to the two adjacent intermediate cylinders 1₂, 1₃ are disposed to confront each other without any wall held therebetween, whereby the supported portions 71 corresponding to the two adjacent intermediate cylinders 1₂, 1₃ can be disposed close to each other in the axial direction A2, andmoreover, since the interference of the supported portions 71 belonging to the intermediate cylinders 1₂, 1₃ with the supported portions 71 belonging to the end cylinders 1₁, 1₄ or the connecting walls 57 in which the accommodating portions 58 are formed can be avoided, the intermediate internal combustion engine E comprising the four cylinders 1₁ to 1₄ arranged in line can be made in size in the axial direction A2.

Since there is no wall for connecting the intake-side and exhaust-side second intermediate lower bearing portions 42, 45 between both the inner longitudinal frames 33, 34, the common intermediate fixing seat 82 on which the two fuel injection valves 6 are mounted between is disposed between both the connecting walls 57, whereby the internal combustion engine E can be made small in size in the axial direction A2 when compared with one in which a fixing seat is provided for each cylinder.

Another embodiment will be described below in which part of the construction of the aforesaid embodiment is modified, and only the construction of the modified part will be described.

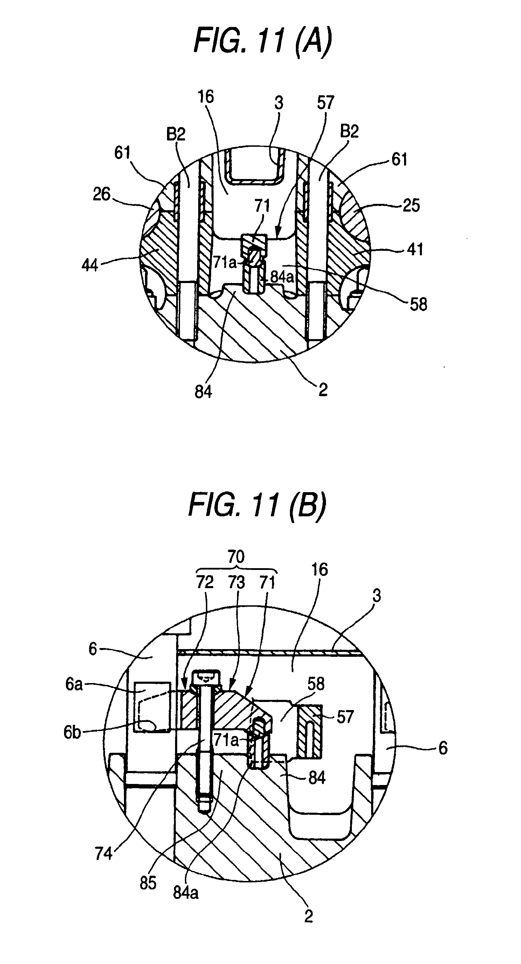

While the support portion 84, which is part of the end fixing seat 81, 82, is accommodated in the accommodating portion 58 in the aforesaid embodiment, as shown in Figs. 11A, 11B, the clamp 70 is disposed in the valve gear chamber 16 inside the cylinder head cover 3, whereby the support portion 84 of the end fixing seat 81 and the supported portion 71 which is part of the clamp 70 can be accommodated in the accommodating portion 58, and then, advantages similar to those provide by the previous embodiment can also be provided by this embodiment. Furthermore, the accommodating portion 58 may be constructed so as to accommodate only the part of the clamp 70.

As shown by double-dashed lines in Figs. 4, 10, an annular resilient member 93 made from, for example, synthetic rubber is mounted in each of annular grooves which are formed in surfaces (or lower surfaces) of the fastening portions 73 of the respective clamps 70 which confront both the end seal portions 3b and the intermediate seal portion 3c in such a manner as to surround the through holes 85a, respectively, and the clamps 70 are fastened at the tightening portions 73 by tightening the bolts 74, whereby the cylinder head cover 3 can be pressed against the fixing seats 81, 82 via the resilient members 93, so that both the end seal portions 3b and the intermediate seal portion 3c can be pressed against the cylinder head 2. Thus, since the central portion of the cylinder head cover 3 is pressed against the cylinder head 2, the rigidity of the cylinder head cover 3 can be enhanced, whereby not only can the generation of noise attributed to vibrations from the cylinder head cover 3 be reduced but also the number of fastening members required to fasten the cylinder head cover 3 can be reduced. Furthermore, since the respective seal members 90, 91 are pressed against the respective fixing seats 81, 82 by virtue of the tightening force of the bolts 74 applied via the resilient members 93, the airtightness of both the end seal portions 3b and the intermediate portions 3c is increased further.

While the pair of clamps 70 are fixed to the intermediate fixing seat 82 in the previous embodiment, one clamp having a pair of supported portions 71, 71, a pair of presser portions 72 and a pair of fastening portions 73 or one clamp having a supported portion, a pair of presser portions 72 and a pair of fastening portions 73 may be fixed thereto.

In addition, the recessed portions 86 corresponding to the exhaust valves 11 in the orthogonal direction A3 may be formed in such a manner as to partially accommodate the valve spring 15 and the spring retainer 14. Furthermore, while the recessed portions 86 are formed on the both sides or the intake and exhaust sides of the fixing seats 81, 82 in the previous embodiment, they may be formed only on the intake side or exhaust side thereof. While the internal combustion engine E is constructed so as to have the two intake valves 10 and the two exhaust valves 11 for each cylinder 1₁ to 1₄ in the previous embodiment, the internal combustion engine E may be constructed such that three or more intake and exhaust valves in total, for example, two intake valves and one exhaust valve or one intake valve and two exhaust valves, may be provided for each cylinder.

While the plane which separates the intake valve openings is the first central plane P1 which includes the cylinder axes L1 and which is parallel with the rotational axes L2, L3 of the camshafts 25, 26 in the previous embodiment, the plane does not have to be parallel with the rotational axes L2, L3 of the camshafts 25, 26, provided that the plane includes the cylinder axes L1. In addition, eddies produced within the cylinders 1₁ to 1₄ does not have to be swirls but may be tumbling currents.

In addition, the internal combustion engine may be a V-type internal combustion engine in which each bank has three or more cylinders that are arranged in line. While the internal combustion engine is the compression ignition internal combustion engine but may be a spark ignition internal combustion engine.

## Claims

1. An internal combustion engine (E), comprising:
a cylinder (11, 12, 13, 14) in which a piston fits to reciprocate freely therein and defining a cylinder axis (L1);
a cylinder head (2) which supports thereon a camshaft (25, 26) rotatably and which defines an intake port (41, 42) having an intake valve opening (41 a, 42a) and an exhaust port (5) having an exhaust valve opening (51 a, 52a); and
a fuel injection valve (6) fixed to said cylinder head (2) with a clamp (70),
wherein three or more valve openings (41 a, 42a, 51 a, 52a) comprising said intake valve opening (41a, 42a) and said exhaust valve opening (51a, 52a) which correspond to said cylinder (11, 12, 13, 14) are disposed around said fuel injection valve (6) at intervals in a circumferential direction,
wherein each of said valve openings (41, 42a, 51a, 52a) is opened and closed by an engine valve device comprising an intake valve (10) or an exhaust valve (11),
a first intake valve opening (41a) and a second intake valve opening (42a) are disposed on one side relative to a plane (P1) including the cylinder axis (L1) and parallel to the rotational axis (L2, L3) of the camshaft (25, 26) and an exhaust valve opening (51a, 52a) is disposed on the other side,
said clamp (70) is disposed, considered in a plane perpendicular to the cylinder axis (L1), between said second intake valve opening (42a) and said exhaust valve opening (52a), which constitute two adjacent valve openings which are adjacent to each other,
the internal combustion engine (E) being **characterized in that**:
said first intake valve opening (41a) is disposed closer to said plane (P1) than said second intake valve opening (42a); and
said second intake valve opening (42a) and said exhaust valve opening (52a) have a widest interval among intervals formed between any two adjacent valve openings of said three or more valve openings (41a, 42a, 51a, 52a).

2. The internal combustion engine (E) as set forth in claim 1,
wherein a fixing seat (80), to which said clamp (70) is fixed, is provided on said cylinder head (2) in such a manner as to protrude upwardly in a direction of the cylinder axis (L1) between said second intake valve opening (42a) and said exhaust valve opening (52a), considered in a plane perpendicular to the cylinder axis (L1), and
wherein said fixing seat (80) defines a recessed portion (86) for avoiding an interference with a constituent member of said engine valve device for opening and closing said second intake valve opening (42a) and/or said exhaust valve opening (52a).

3. The internal combustion engine (E) as set forth in claim 1 or 2,
wherein said internal combustion engine (E) has a plurality of said cylinders (11, 12, 13, 14) that are arranged in line,
wherein said second intake valve opening (42a) and said exhaust valve opening (52a) of said plurality of said cylinders (11, 12, 13, 14) are disposed substantially symmetrically with respect to a central plane (P2) of said cylinder head (2), which passes through a central point in an axial direction of said camshaft (25, 26) and intersects a rotational axis (L2, L3) of said camshaft (25, 26) orthogonally,
wherein said clamp (70) includes:
a presser portion (72) which presses against said fuel injection valve (6); and
a fixed portion (71, 73) which is adapted to be fixed to said fixing seat (80), and
said fixed portion (71, 73) of said clamp (70) for said fuel injection valve (6) corresponding to said cylinder (11, 14) situated at either end portion in said axial direction is situated closer to said central plane (P2) than said presser portion (72).

4. The internal combustion engine (E) as set forth in claim 1 or 2,
wherein said internal combustion engine (E) has a plurality of said cylinders (11, 12, 13, 14) that arranged in line, and wherein in said cylinder (11, 14) situated at each end portion in said axial direction of said camshaft (25, 26),
said second intake valve opening (42a) and said exhaust valve opening (52a) are situated closer to the center of said cylinder head (2) in said axial direction relative to said remaining valve opening.

5. The internal combustion engine (E) as set forth in claim 3 or 4,
wherein said camshaft (25, 26) comprises an intake camshaft (25) and an exhaust camshaft (26), which are disposed in parallel with each other
and are rotatably supported on a cylinder head (2) via a plurality of intake-side bearing portions (40, 41, 42) and a plurality of exhaust-side bearing portions (43, 44, 45) respectively, and
a fixed portion (71, 73) which is adapted to be fixed to a fixing portion (84, 85) of said fixing seat (80),
wherein said clamp (70), said intake-side bearing portion (40, 41, 42) and said exhaust-side bearing portion (43, 44, 45) are disposed so as to have portions situated on the same plane which intersects with a cylinder axis (L1) of said cylinder (11, 12, 13, 14) orthogonally,
wherein joining portions of said intake-side bearing portion (41) and said exhaust-side bearing portion (44) to said cylinder head (2) are connected to each other by a connecting wall (57), between said intake camshaft (25) and said exhaust camshaft (26), and
wherein an accommodating portion (58) for accommodating at least either part of said fixing seat (80) or part of said clamp (70) is formed in said connecting wall (57) in such a manner as to opening in an axial direction of said intake camshaft (25) or said exhaust camshaft (26).

6. The internal combustion engine (E) as set forth in claim 5,
wherein said clamp (70) is, considered in a plane perpendicular to the cylinder axis (L1), disposed between said intake camshaft (25) and said exhaust camshaft (26) such that said presser portion (72) and said fixed portion (71, 73) extend along said axial direction, and
wherein said accommodating portion (58) for accommodating at least wither said fixing portion (84, 85) or said fixed portion (71, 73) is formed in said connecting wall (57).

7. The internal combustion engine as set forth in claim 6,
wherein said fixed portion (71, 73) which corresponds to one of end cylinders (11, 14) situated at both ends in said axial direction is disposed so as to be closer to an intermediate cylinder (12, 13) situated between both said end cylinders (11, 14) in said axial direction relative to said presser portion (72),
and wherein said connecting wall (57) is constructed by a curved wall
such that a side thereof close to said accommodating portion (58) in said axial direction is formed in a concave shape for forming said accommodating portion (58).

8. The internal combustion engine (E) as set forth in claim 7,
wherein said fixed portions (71, 73), which correspond, respectively, to said intermediate cylinders (12, 13), are two in number,
said fixed portions (71, 73) are adjacent to each other and confront directly without a wall positioned therebetween, and
said fixed portions (71, 73) connects, considered in a plane perpendicular to the cylinder axis (L1), said intake-side bearing portion (42) with said exhaust-side bearing portion (44).

9. The internal combustion engine (E) as set forth in any one of claims 5 to 8, wherein
an elastic member (93) is interposed between said fixed portion (71, 73) of said clamp (70) and said fixing portion (84, 85) of said fixing seat (80).

## Patentansprüche

1. Verbrennungsmotor (E) umfassend:
einen Zylinder (11, 12, 13, 14), in den ein Kolben frei hin- und herbeweglich eingesetzt ist und der eine Zylinderachse (L1) definiert; einen Zylinderkopf (2), der darauf eine Nockenwelle (25, 26) drehbar trägt und der einen Einlasskanal (41, 42) mit einer Einlassventilöffnung (41a, 42a) und einen Auslasskanal (5) mit einer Auslassventilöffnung (51 a, 52a) definiert; und
ein Kraftstoffeinspritzventil (6), das an dem Zylinderkopf (2) mit einer Klemme (70) befestigt ist,
worin drei oder mehr Ventilöffnungen (41a, 42a, 51a, 52a), welche die Einlassventilöffnung (41 a, 42) und die Auslassventilöffnung (51 a, 52a), die dem Zylinder (11, 12, 13, 14) entsprechen, aufweisen, mit Intervallen in Umfangsrichtung um das Kraftstoffeinspritzventil (6) herum angeordnet sind,
worin jede der Ventilöffnungen (41 a, 42a, 51 a, 52a) durch eine Motorventilvorrichtung geöffnet und geschlossen wird, die ein Einlassventil (10) oder ein Auslassventil (12) aufweist,
eine erste Einlassventilöffnung (41a) und eine zweite Einlassventilöffnung (42a) an einer Seite im Bezug auf eine Ebene (P1) angeordnet sind, die die Zylinderachse (L1) enthält und parallel zur Drehachse (L2, L3) der Nockenwelle (25, 26) ist, und eine Auslassventilöffnung (51 a, 52a) an der anderen Seite angeordnet ist,
wobei die Klemme (17), in Bezug auf eine zur Zylinderachse (L1) orthogonale Ebene (L1), zwischen der zweiten Einlassventilöffnung (42a) und der Auslassventilöffnung (52a) angeordnet ist, welche zwei einander benachbarte Ventilöffnungen darstellen,
wobei der Verbrennungsmotor (E) **dadurch gekennzeichnet ist, dass**:
die erste Einlassventilöffnung (41 a) näher an der Ebene (P1) angeordnet ist als die zweite Einlassventilöffnung (42a); und
die zweite Einlassventilöffnung (42a) und die Auslassventilöffnung (52a) ein weitestes Intervall unter den Intervallen haben, die zwischen zwei beliebigen benachbarten Ventilöffnungen der drei oder mehr Ventilöffnungen (41 a, 42a, 51 a, 52a) gebildet sind.

2. Der Verbrennungsmotor (E) gemäß Anspruch 1, worin ein Befestigungssitz (80), an dem die Klemme (70) befestigt ist, an dem Zylinderkopf (2) derart vorgesehen ist, dass er, in Bezug auf eine zur Zylinderachse (L1) orthogonale Ebene, in Richtung der Zylinderachse (L1) zwischen der zweiten Einlassventilöffnung ((42a) und der Auslassventilöffnung (52a) nach oben vorsteht, und worin der Befestigungssitz (80) einen Vertiefungsabschnitt (86) zur Vermeidung einer Störung mit einem Bauelement der Motorventilvorrichtung zum Öffnen/Schließen der zweiten Einlassventilöffnung (42) und/oder der Auslassventilöffnung (52a) definiert.

3. Der Verbrennungsmotor (E) gemäß Anspruch 1 oder 2, worin der Verbrennungsmotor (E) eine Mehrzahl der Zylinder (11, 12, 13, 14) aufweist, die in einer Reihe angeordnet sind,
worin die zweite Einlassventilöffnung (42a) und die Auslassventilöffnung (52a) der Mehrzahl der Zylinder (11, 12, 13, 14) im Wesentlichen symmetrisch in Bezug auf eine Mittelebene (P2) des Zylinderkopfs (2) angeordnet sind, die durch einen Mittelpunkt in axialer Richtung der Nockenwelle (25, 26) hindurch geht und eine Drehachse (L2, L3) der Nockenwelle (25, 26) orthogonal schneidet,
worin die Klemme (70) enthält:
einen Druckabschnitt (72), der gegen das Kraftstoffeinspritzventil (6) drückt; und
einen befestigten Abschnitt (71, 73), der dazu ausgelegt ist, an dem Befestigungssitz (80) befestigt zu werden, und
wobei der befestigte Abschnitt (71, 73) der Klemme (70) für das Kraftstoffeinspritzventil (6) entsprechend dem Zylinder (11, 14), der an einem Endabschnitt in der axialen Richtung angeordnet ist, näher an der Mittelebene (P2) angeordnet ist als der Druckabschnitt (72).

4. Der Verbrennungsmotor (E) gemäß Anspruch 1 oder 2, worin der Verbrennungsmotor (E) eine Mehrzahl der Zylinder (11, 12, 13, 14) aufweist, die in einer Reihe angeordnet sind, worin in dem Zylinder (11, 14), der an jedem Endabschnitt in der axialen Richtung der Nockenwelle (25, 26) angeordnet ist, die zweite Einlassventilöffnung (42a) und die Auslassventilöffnung (52a) relativ zu der verbleibenden Ventilöffnung näher an der Mitte des Zylinderkopfs (2) in der axialen Richtung angeordnet sind.

5. Der Verbrennungsmotor (E) gemäß Anspruch 3 oder 4, worin die Nockenwelle (25, 26) eine Einlassnockenwelle (25) und eine Auslassnockenwelle (26) aufweist, die jeweils parallel zueinander angeordnet sind und an dem Zylinderkopf (2) über eine Mehrzahl von einlassseitigen Lagerabschnitten (40, 41, 42) und eine Mehrzahl von auslassseitigen Lagerabschnitten (43, 44, 55) gelagert sind, und ein befestigter Abschnitt (71, 73), der dazu aufgelegt ist, an einem Befestigungsabschnitt (84, 85) des Befestigungssitzes (50) befestigt zu werden,
worin die Klemme (70), der einlassseitige Lagerabschnitt (40, 41, 42) und der auslassseitige Lagerabschnitt (43, 44, 45) so angeordnet sind, dass sie Abschnitte aufweisen, die auf der gleichen Ebene angeordnet sind, welche eine Zylinderachse (L1) des Zylinders (11, 12, 13, 14, 15) orthogonal schneidet,
wobei Verbindungsabschnitte des einlassseitigen Lagerabschnitts (41) und des auslassseitigen Lagerabschnitts (44) mit dem Zylinderkopf (2) durch eine Verbindungswand (57) zwischen der Einlassnockenwelle (25) und der Auslassnockenwelle (26) miteinander verbunden sind, und
worin ein Aufnahmeabschnitt (58) zur Aufnahme zumindest eines Teils des Befestigungssitzes (80) oder eines Teils der Klemme (70) in der Verbindungswand (57) derart ausgebildet ist, dass er sich in axialer Richtung der Einlassnockenwelle (25) oder der Auslassnockenwelle (26) öffnet.

6. Der Verbrennungsmotor (E) gemäß Anspruch 5, worin die Klemme (70), in Bezug auf eine zur Zylinderachse (L1) orthogonale Ebene, zwischen der Einlassnockenwelle (25) und der Auslassnockenwelle (26) angeordnet ist, so dass sich der Druckabschnitt (72) und der befestigte Abschnitt (70, 73) entlang der axialen Richtung erstrecken, und
worin der Aufnahmeabschnitt (58) zur Aufnahme zumindest entweder des Befestigungsabschnitts (84, 85) oder des befestigten Abschnitts (71, 73) in der Verbindungswand (57) ausgebildet ist.

7. Der Verbrennungsmotor gemäß Anspruch 6, worin der befestigte Abschnitt (71, 73), der einem von endseitigen Zylindern (11, 14) entspricht, die an beiden Enden in der axialen Richtung angeordnet sind, so angeordnet ist, dass er einem zwischenliegenden Zylinder (12, 13) näher ist, der in Bezug auf den Druckabschnitt (72) zwischen den beiden endseitigen Zylindern (11, 14) in der axialen Richtung angeordnet ist,
und worin die Verbindungswand (57) durch eine gekrümmte Wand aufgebaut ist, derart, dass eine Seite davon, die dem Aufnahmeabschnitt (58) in der axialen Richtung nahe ist, in einer konkaven Form zur Bildung des Aufnahmeabschnitts (58) aufgebildet ist.

8. Der Verbrennungsmotor (E) gemäß Anspruch 7, worin die Anzahl der befestigten Abschnitte (71, 73), die jeweils den zwischenliegenden Zylindern (12, 13) entsprechen, zwei ist,
wobei die befestigten Abschnitte (71, 73), die einander benachbart sind, ohne eine dazwischen angeordnete Wand direkt einander gegenüberliegen, und
die befestigen Abschnitte (71, 73), im Bezug auf eine zur Zylinderachse (L1) orthogonale Ebene, den einlassseitigen Lagerabschnitt (42) mit dem auslassseitigen Lagerabschnitt (44) verbinden.

9. Der Verbrennungsmotor (E) gemäß einem der Ansprüche 5 bis 8, worin ein elastisches Element (93) zwischen den befestigten Abschnitt (71, 73) der Klemme (70) und den Befestigungsabschnitt (84, 85) des Befestigungssitzes (80) eingesetzt ist.

## Revendications

1. Moteur à combustion interne (E), comprenant :
un cylindre (11, 12, 13, 14) dans lequel un piston est monté pour effectuer un mouvement de va-et-vient librement à l'intérieur de celui-ci et définissant un axe de cylindre (L1) ;
une culasse (2) qui supporte sur celle-ci un arbre à cames (25, 26) de manière rotative et qui définit un orifice d'admission (41, 42) ayant une ouverture de soupape d'admission (41a, 42a) et un orifice d'échappement (5) ayant une ouverture de soupape d'échappement (51a, 52a) ; et
une soupape d'injection de carburant (6) fixée sur ladite culasse (2) avec un dispositif de serrage (70),
dans lequel trois ouvertures de soupape (41a, 42a, 51a, 52a) ou plus comprenant ladite ouverture de soupape d'admission (41a, 42a) et ladite ouverture de soupape d'échappement (51a, 52a) qui correspond audit cylindre (11, 12, 13, 14) sont disposées autour de ladite soupape d'injection de carburant (6) à intervalles dans une direction circonférentielle,
dans lequel chacune desdites ouvertures de soupape (41, 42a, 51a, 52a) est ouverte et fermée par un dispositif de soupape de moteur comprenant une soupape d'admission (10) ou une soupape d'échappement (11),
une première ouverture de soupape d'admission (41a) et une seconde ouverture de soupape d'admission (42a) sont disposées sur un côté par rapport à un plan (P1) comprenant l'axe de cylindre (L1) et parallèle à l'axe de rotation (L2, L3) de l'arbre à cames (25, 26) et une ouverture de soupape d'échappement (51a, 52a) est disposée de l'autre côté,
ledit dispositif de serrage (70) est disposé, considéré dans un plan perpendiculaire à l'axe de cylindre (L1) entre ladite seconde ouverture de soupape d'admission (42a) et ladite ouverture de soupape d'échappement (52a) qui constituent deux ouvertures de soupape adjacentes qui sont adjacentes l'une par rapport à l'autre,
le moteur à combustion interne (E) étant
**caractérisé en ce que :**
ladite première ouverture de soupape d'admission (41a) est disposée plus près dudit plan (P1) que ladite seconde ouverture de soupape d'admission (42a) ; et
ladite seconde ouverture de soupape d'admission (42a) et ladite ouverture de soupape d'échappement (52a) ont un intervalle le plus large parmi les intervalles formés entre l'une quelconque des deux ouvertures de soupape adjacentes desdites trois ouvertures de soupape (41a, 42a, 51a, 52a) ou plus.

2. Moteur à combustion interne (E) selon la revendication 1, dans lequel un siège de fixation (80) sur lequel ledit dispositif de serrage (70) est fixé, est prévu sur ladite culasse (2) afin de faire saillie vers le haut dans une direction de l'axe de cylindre (L1) entre ladite seconde ouverture de soupape d'admission (42a) et ladite ouverture de soupape d'échappement (52a), considérées dans un plan perpendiculaire à l'axe de cylindre (L1), et dans lequel ledit siège de fixation (80) définit une partie évidée (86) pour éviter une interférence entre un élément de constitution dudit dispositif de soupape de moteur pour ouvrir et fermer ladite seconde ouverture de soupape d'admission (42a) et/ou ladite ouverture de soupape d'échappement (52a).

3. Moteur à combustion interne (E) selon la revendication 1 ou 2, dans lequel ledit moteur à combustion interne (E) a une pluralité desdits cylindres (11, 12, 13, 14) qui sont agencés en ligne,
dans lequel ladite seconde ouverture de soupape d'admission (42a) et ladite ouverture de soupape d'échappement (52a) de ladite pluralité desdits cylindres (11, 12, 13, 14) sont disposées de manière sensiblement symétrique par rapport à un plan central (P2) de ladite culasse (2) qui passe par un point central dans une direction axiale dudit arbre à cames (25, 26) et coupe un axe de rotation (L2, L3) dudit arbre à cames (25, 26) orthogonalement, dans lequel ledit dispositif de serrage (70) comprend :
une partie de pression (72) qui appuie contre ladite soupape d'injection de carburant (6) ; et
une partie fixe (71, 73) qui est adaptée pour être fixée sur ledit siège de fixation (80), et
ladite partie fixe (71, 73) dudit dispositif de serrage (70) pour ladite soupape d'injection de carburant (6) correspondant audit cylindre (11, 14) situé au niveau de chaque partie d'extrémité dans ladite direction axiale est située plus à proximité dudit plan central (P2) que ladite partie de pression (72).

4. Moteur à combustion interne (E) selon la revendication 1 ou 2, dans lequel ledit moteur à combustion interne (E) a une pluralité desdits cylindres (11, 12, 13, 14) qui sont agencés en ligne et dans lequel dans ledit cylindre (11, 14) situé au niveau de chaque partie d'extrémité dans ladite direction axiale dudit arbre à cames (25, 26),
ladite seconde ouverture de soupape d'admission (42a) et ladite ouverture de soupape d'échappement (52a) sont situées plus à proximité du centre de ladite culasse (2) dans ladite direction axiale par rapport à l'ouverture de soupape restante.

5. Moteur à combustion interne (E) selon la revendication 3 ou 4, dans lequel ledit arbre à cames (25, 26) comprend un arbre à cames d'admission (25) et un arbre à cames d'échappement (26) qui sont disposés en parallèle l'un par rapport à l'autre et sont supportés de manière rotative sur une culasse (2) via une pluralité de parties de palier du côté de l'admission (40, 41, 42) et une pluralité de parties de palier du côté de l'échappement (43, 44, 45) respectivement, et
une partie fixe (71, 73) qui est adaptée pour être fixée sur une partie de fixation (84, 85) dudit siège de fixation (80),
dans lequel ledit dispositif de serrage (70), ladite partie de palier du côté de l'admission (40, 41, 42) et ladite partie de palier du côté de l'échappement (43, 44, 45) sont disposés afin d'avoir des parties situées sur le même plan qui coupe un axe de cylindre (L1) dudit cylindre (11, 12, 13, 14) orthogonalement, dans lequel les parties d'assemblage de ladite partie de palier du côté de l'admission (41) et ladite partie de palier du côté de l'échappement (44) par rapport à ladite culasse (2) sont raccordées entre elles par une paroi de raccordement (57), entre ledit arbre à cames d'admission (25) et ledit arbre à cames d'échappement (26), et dans lequel une partie de logement (58) pour loger au moins une partie dudit siège de fixation (80) ou une partie dudit dispositif de serrage (70) est formée dans ladite paroi de raccordement (57) afin de s'ouvrir dans une direction axiale dudit arbre à cames d'admission (25) ou dudit arbre à cames d'échappement (26).

6. Moteur à combustion interne (E) selon la revendication 5, dans lequel ledit dispositif de serrage (70) est, considéré dans un plan perpendiculaire à l'axe de cylindre (L1), disposé entre ledit arbre à cames d'admission (25) et ledit arbre à cames d'échappement (26) de sorte que ladite partie de pression (72) et ladite partie fixe (71, 73) s'étendent le long de ladite direction axiale, et dans lequel ladite partie de logement (58) pour loger au moins ladite partie de fixation (84, 85) ou ladite partie fixe (71, 73) est formée dans ladite paroi de raccordement (57).

7. Moteur à combustion interne selon la revendication 6, dans lequel ladite partie fixe (71, 73) qui correspond à l'un des cylindres d'extrémité (11, 14) situés aux deux extrémités dans ladite direction axiale, est disposée pour être plus à proximité d'un cylindre intermédiaire (12, 13) situé entre lesdits deux cylindres d'extrémité (11, 14) dans ladite direction axiale par rapport à ladite partie de pression (72),
et dans lequel ladite paroi de raccordement (57) est construite par une paroi incurvée de sorte que son côté à proximité de ladite partie de logement (58) dans ladite direction axiale est formé selon une forme concave pour former ladite partie de logement (58).

8. Moteur à combustion interne (E) selon la revendication 7, dans lequel lesdites parties fixes (71, 73) qui correspondent respectivement auxdits cylindres intermédiaires (12, 13) sont au nombre de deux, lesdites parties fixes (71, 73) sont adjacentes l'une par rapport à l'autre et se font directement face sans paroi positionnée entre elles, et
lesdites parties fixes (71, 73) raccordent, considérées dans un plan perpendiculaire à l'axe de cylindre (L1), ladite partie de palier du côté d'admission (42) avec ladite partie de palier du côté de l'échappement (44).

9. Moteur à combustion interne (E) selon l'une quelconque des revendications 5 à 8, dans lequel un élément élastique (93) est intercalé entre ladite partie fixe (71, 73) dudit dispositif de serrage (70) et ladite partie de fixation (84, 85) dudit siège de fixation (80).
